# EUROPEAN PATENT APPLICATION

(11) **EP 4 462 314 A1**
(43) Date of publication of application: **13.11.2024**
(21) Application number: 23759084.9
(22) Date of filing: 16.02.2023
(51) Int. Cl.: G06N 3/08

(54) **ARTIFICIAL INTELLIGENCE ALGORITHM MODEL ACQUISITION METHOD AND APPARATUS**

(30) Priority: 24.02.2022 CN 202210173047; 18.03.2022 CN 202210271417
(71) Applicant: Huawei Technologies Co., Ltd., Shenzhen, Guangdong 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN)
(74) Representative: Gill Jennings & Every LLP
(86) International application number: PCT/CN2023/076515
(87) International publication number: WO 2023/160459

(57) **Abstract**

An artificial intelligence algorithm model obtaining method and an apparatus, to select an appropriate artificial intelligence algorithm model for data, and may be used in various communication systems. The method includes: A network device determines N artificial intelligence algorithm models in M artificial intelligence algorithm models based on data feature information and M pieces of model feature information, and sends, to a terminal device, configuration information corresponding to at least one of the N artificial intelligence algorithm models, where the M pieces of model feature information correspond one-to-one to the M artificial intelligence algorithm models, the N artificial intelligence algorithm models are more suitable for processing data than remaining (M-N) artificial intelligence algorithm models of the M artificial intelligence algorithm models, an i^{th} piece of model feature information in the M pieces of model feature information includes a feature of an i^{th} artificial intelligence algorithm model, and the data feature information includes a feature of first data.

## Description

This application claims priorities to Chinese Patent Application No. 202210173047.2, filed with the China National Intellectual Property Administration on February 24, 2022 and entitled "AI MODEL APPLICATION SCENARIO DETERMINING METHOD AND APPARATUS", and to Chinese Patent Application No. 202210271417.6, filed with the China National Intellectual Property Administration on March 18, 2022 and entitled "ARTIFICIAL INTELLIGENCE ALGORITHM MODEL OBTAINING METHOD AND APPARATUS", both of which are incorporated herein by reference in their entireties.

### TECHNICAL FIELD

This application relates to the communication field, and in particular, to an artificial intelligence algorithm model obtaining method and an apparatus.

### BACKGROUND

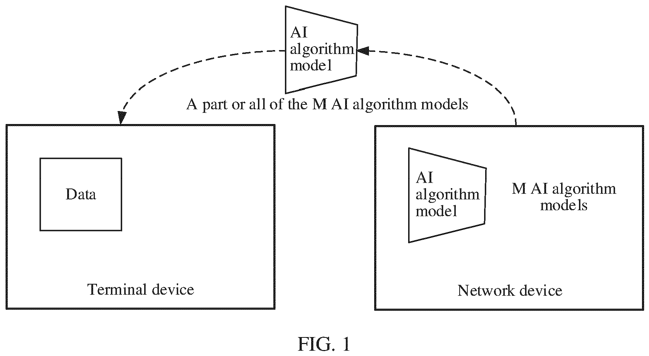

In a scenario in which an artificial intelligence (Artificial Intelligence, AI) technology is introduced into a wireless communication system, with reference to FIG. 1, a network device stores M AI algorithm models, where M is a positive integer greater than or equal to 1. A terminal device stores pre-obtained data, and the data is to be processed, for example, encoded or decoded, by using the AI algorithm model stored in the network device. The network device may send a part or all of the M AI algorithm models to the terminal device. The terminal device may receive the part or all of the M AI algorithm models from the network device, and process the data on the terminal device side by using the received at least one AI algorithm model.

However, the AI algorithm model is trained based on training data. The AI algorithm model is not applicable to data that deviates greatly from the training data or data that is not identically distributed with the training data. If the terminal device processes the data by using an AI algorithm model that is not applicable, precision of data obtained through the processing is poor, system performance is affected, and user experience deteriorates. Therefore, how to select an appropriate AI algorithm model for the data becomes an urgent problem to be resolved.

### SUMMARY

This application provides an AI algorithm model obtaining method and an apparatus, to select an appropriate AI algorithm model for data. To achieve the foregoing technical objective, the following technical solutions may be used in this application.

According to a first aspect, an AI algorithm model obtaining method is provided. The method includes: A network device obtains M pieces of model feature information, receives data feature information from a terminal device, determines N artificial intelligence algorithm models in M artificial intelligence algorithm models based on the data feature information and M pieces of model feature information, and sends, to the terminal device when a first condition is satisfied, configuration information corresponding to at least one of the N artificial intelligence algorithm models, where the M pieces of model feature information correspond one-to-one to the M artificial intelligence algorithm models stored in the network device or stored in a device (for example, a server) corresponding to the network device. An i^{th} piece of model feature information in the M pieces of model feature information includes a feature of an i^{th} artificial intelligence algorithm model, and the M artificial intelligence algorithm models are models that are capable of processing first data pre-obtained by the terminal device; the first data is data to be processed by using the artificial intelligence algorithm model stored in the network device; the N artificial intelligence algorithm models are more suitable for processing the data than remaining (M-N) artificial intelligence algorithm models of the M artificial intelligence algorithm models; the data feature information includes a feature of the first data; and the configuration information is used to configure one or more of the following: the artificial intelligence algorithm model, a parameter of the artificial intelligence algorithm model, and a manner of obtaining the artificial intelligence algorithm model, where M is a positive integer greater than or equal to 1, N is an integer greater than or equal to 0 and less than or equal to M, and i is any positive integer less than or equal to M.

According to the method provided in the first aspect, the network device determines the N artificial intelligence algorithm models in the M artificial intelligence algorithm models based on the feature of the first data and the M pieces of model feature information, and sends, to the terminal device when the first condition is satisfied, the configuration information corresponding to the at least one of the N artificial intelligence algorithm models. The M pieces of model feature information correspond one-to-one to the M artificial intelligence algorithm models, the model feature information includes a feature of the artificial intelligence algorithm model, and the N artificial intelligence algorithm models are more suitable for processing the data than the remaining (M-N) artificial intelligence algorithm models in the M artificial intelligence algorithm models. In this way, accurate matching between the artificial intelligence algorithm model and the data can be implemented, a more applicable artificial intelligence algorithm model can be obtained for the data, and processed first data with high precision can be obtained, to improve system performance.

Optionally, the first condition includes that N is greater than or equal to 1.

In addition, no additional information (for example, an AI decoder or original data) needs to be transmitted between the network device and the terminal device. The solution is simple. The accurate matching between the artificial intelligence algorithm model and the data can be implemented through lightweight data transmission and calculation.

In a possible implementation, the i^{th} piece of model feature information may be determined based on features of K pieces of training data, the K pieces of training data are training data of the i^{th} artificial intelligence algorithm model, and K is an integer greater than or equal to 1. In other words, the feature of the artificial intelligence algorithm model may be determined based on the feature of training data corresponding to the artificial intelligence algorithm model.

In a possible implementation, that the i^{th} piece of model feature information is determined based on features of K pieces of training data may include: The i^{th} piece of model feature information is determined based on a sum of the features of the K pieces of training data, or the model feature information is determined based on an average value of the features of the K pieces of training data.

In a possible implementation, a feature of one of the K pieces of training data is obtained in a first manner, where the first manner includes a first processing process, and the first processing process includes histogram statistics collection. The feature that is of the training data and that is obtained based on the histogram statistics collection includes richer information, and the feature of the training data can accurately reflect the artificial intelligence algorithm model, so that a more accurate matching evaluation result (applicability between the data and the artificial intelligence algorithm model) can be obtained.

In a possible implementation, the first manner further includes a second processing process and/or a third processing process, where the second processing process is a processing process before the first processing process, and the third processing process is a processing process after the first processing process.

In this way, before the histogram statistics collection is performed on the training data, the second processing process is used to process the training data, and/or after the histogram statistics collection is performed on the training data, the third processing process is used to process a result of the histogram statistics collection. This can further improve accuracy of the feature of the training data.

In a possible implementation, before that a network device obtains M pieces of model feature information, receives data feature information from a terminal device, the method provided in the first aspect may further include: The network device sends a data feature request to the terminal device. The data feature request is used to request the data feature information. In this way, the network device may request the feature of the first data from the terminal device, to determine the applicable artificial intelligence algorithm model for the first data.

In a possible implementation, the data feature request may include at least one of first indication information and second indication information.

The first indication information may indicate a process of obtaining the data feature information.

The second indication information may indicate a manner of obtaining the data feature information.

In this way, the network device may indicate a process and/or a manner of the terminal device.

In a possible implementation, the second processing process may include but is not limited to one or more of the following: Fourier transform, fast Fourier transform (fast Fourier transform, FFT), discrete Fourier transform (discrete Fourier transform, DFT), data truncation, coordinate conversion, noise reduction, normalization, grayscale, data correction (for example, gamma correction), quantization, singular value decomposition (singular value decomposition, SVD), translation, data augmentation (data augmentation), gradient calculation, feature template filtering, partial selection, and combining of a plurality of processing results.

It should be noted that, when the second processing process includes a plurality of the foregoing processes, an execution sequence of the Fourier transform, FFT, DFT, data truncation, coordinate conversion, noise reduction, normalization, grayscale, data correction (for example, gamma correction), quantization, SVD, translation, data augmentation, gradient calculation, feature template filtering, partial selection, and combining of a plurality of processing results is not limited in this application.

In a possible implementation, the third processing process may include but is not limited to one or more of the following: normalization, feature combining, dimension reduction, quantization, and encoding.

In a possible implementation, the first manner may be a histogram of oriented gradients (histogram of oriented gradients, HOG), a local binary pattern (local binary pattern, LBP), an edge orientation histogram (edge orientation histogram, EOH), an edge histogram descriptor (edge histogram descriptor, EHD), an edge direction histogram (edge direction histogram, EDH), a deformable part model (deformable part model, DPM), scale-invariant feature transformation (scale-invariant feature transform, SIFT), or speeded up robust features (speeded up robust features, SURF).

For example, in addition to the first processing process, the HOG method further includes the second processing process such as the grayscale and gradient calculation, and the third processing process such as the normalization. Similarly, the local binary pattern LBP method includes the first processing process, and further includes the second processing process and the third processing process. Details are not described in this application.

In a possible implementation, the first condition includes that N is greater than or equal to 1.

In a possible implementation, N first distances are N first distances having smallest values in M first distances, the first distance is a distance between the feature of the artificial intelligence algorithm model and the feature of the first data, the N first distances correspond one-to-one to the N artificial intelligence algorithm models, and the M first distances correspond one-to-one to the M artificial intelligence algorithm models.

In this way, the artificial intelligence algorithm model that is more applicable to the first data may be selected by calculating a distance between the feature of the first data and the feature of the artificial intelligence algorithm model.

When all the M first distances are greater than a first threshold, N is 0; or when at least one of the M first distances is less than or equal to a first threshold, N is not 0. The first threshold may be preset by the network device.

In a possible implementation, the first distance may include but is not limited to one or more of the following: a cosine similarity, a Euclidean distance, a Manhattan distance, a standard Euclidean distance, a squared Euclidean distance, a Canberra distance, a Chebyshev distance, a correlation distance, a Markov distance, and a Minkowski distance.

In a possible implementation, that a network device receives data feature information from a terminal device may include: The network device receives the data feature information from the terminal device, and third indication information and/or fourth indication information from the terminal device.

The third indication information indicates a process of obtaining the data feature information.

The fourth indication information indicates a manner of obtaining the data feature information.

In this way, the terminal device notifies the network device of a manner used by the terminal device in a process of obtaining the data feature information and/or a process included in the manner used by the terminal device in the process of obtaining the data feature information, and the network device may obtain the M pieces of model feature information based on the third indication information and/or the fourth indication information.

In a possible implementation, that a network device obtains M pieces of model feature information may include: The network device obtains the M pieces of model feature information based on the third indication information and/or the fourth indication information.

According to a second aspect, an AI algorithm model obtaining method is provided. The method includes: A terminal device processes pre-obtained first data in a first manner, to obtain data feature information; the terminal device sends the data feature information to the network device; and the terminal device receives configuration information corresponding to at least one of N artificial intelligence algorithm models from the network device, where the first manner includes a first processing process, and the first processing process includes histogram statistics collection; and the configuration information is used to configure one or more of the following: the artificial intelligence algorithm model, a parameter of the artificial intelligence algorithm model, and a manner of obtaining the artificial intelligence algorithm model.

In a possible implementation, the first data is determined based on downlink channel state information (channel state information, CSI).

In a possible implementation, the first manner may further include a second processing process and/or a third processing process, where the second processing process may be a processing process before the first processing process, and the third processing process may be a processing process after the first processing process.

In a possible implementation, the method provided in the second aspect may further include: The terminal device receives a data feature request from the network device, where the data feature request is used to request data feature information.

In a possible implementation, the data feature request includes at least one of first indication information and second indication information, where
the first indication information indicates a process of obtaining the data feature information; and
the second indication information indicates a manner of obtaining the data feature information.

In a possible implementation, that a terminal device processes pre-obtained first data in a first manner, to obtain data feature information may include: The terminal device processes the pre-obtained first data in the first manner based on the first indication information and/or the second indication information, to obtain the data feature information.

In a possible implementation, that the terminal device sends the data feature information to the network device may include: The terminal device sends the data feature information, and the third indication information and/or the fourth indication information to the network device, where
the third indication information indicates a process of obtaining the data feature information; and
the fourth indication information indicates a manner of obtaining the data feature information.

In a possible implementation, the downlink channel state information CSI is represented by using a first dimension, a second dimension, and a third dimension, where the first dimension corresponds to a quantity of carriers or a quantity of sub-bands, the second dimension corresponds to a quantity of antenna ports or a quantity of radio frequency chains of the network device, and the third dimension represents a real part and an imaginary part.

In a possible implementation, that the downlink channel state information CSI is represented by using a first dimension, a second dimension, and a third dimension may include: The downlink channel state information CSI is represented by using the first dimension, the second dimension, the third dimension, and a fourth dimension, where the fourth dimension corresponds to a quantity of antennas of the terminal device.

In a possible implementation, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

In addition, for technical effects of the method according to the second aspect, refer to the technical effects of the method according to any possible implementation of the first aspect. Details are not described herein again.

According to a third aspect, an AI algorithm model obtaining method is provided. The method includes: A terminal device receives a first message from a network device, obtains data feature information, and determining N artificial intelligence algorithm models in M artificial intelligence algorithm models based on the data feature information and M pieces of model feature information, where the first message includes M pieces of model feature information, the M pieces of model feature information correspond one-to-one to the M artificial intelligence algorithm models stored in the network device or stored in a device (for example, a server) corresponding to the network device, an i^{th} piece of model feature information in the M pieces of model feature information includes a feature of an i^{th} artificial intelligence algorithm model, and the M artificial intelligence algorithm models are models that are capable of processing first data pre-obtained by the terminal device; the first data is data to be processed by using the artificial intelligence algorithm model stored in the network device; the data feature information includes a feature of the first data; and the N artificial intelligence algorithm models are more suitable for processing the data than remaining (M-N) artificial intelligence algorithm models of the M artificial intelligence algorithm models, where M is a positive integer greater than or equal to 1, N is an integer greater than or equal to 0 and less than or equal to M, and i is any positive integer less than or equal to M.

In a possible implementation, a sequence of receiving, by the terminal device, the first message from the network device and obtaining, by the terminal device, the data feature information is not limited. The terminal device may obtain the data feature information before the terminal device receives the first message from the network device. The terminal device may obtain the data feature information after the terminal device receives the first message from the network device. The terminal device may alternatively simultaneously receive the first message from the network device and obtain the data feature information.

In a possible implementation, the data feature information may be obtained in a first manner, where the first manner includes a first processing process, and the first processing process may include histogram statistics collection.

In a possible implementation, the first data is determined based on downlink channel state information CSI.

In a possible implementation, the first manner may further include a second processing process and/or a third processing process, where the second processing process is a processing process before the first processing process, and the third processing process is a processing process after the first processing process.

In a possible implementation, the first message further includes at least one of first indication information and second indication information, where
the first indication information may indicate a process of obtaining the data feature information, and
the second indication information may indicate a manner of obtaining the data feature information.

In a possible implementation, the first message may further include configuration information respectively corresponding to the M artificial intelligence algorithm models, and the configuration information may be used to configure one or more of the following: an artificial intelligence algorithm model, a parameter of the artificial intelligence algorithm model, and a manner of obtaining the artificial intelligence algorithm model.

In a possible implementation, when a first condition is satisfied, the terminal device processes the data by using at least one of the N artificial intelligence algorithm models.

In a possible implementation, the first condition includes that N is greater than or equal to 1.

In a possible implementation, N first distances are N first distances having smallest values in M first distances, the first distance is a distance between the feature of the artificial intelligence algorithm model and the feature of the first data, the N first distances correspond one-to-one to the N artificial intelligence algorithm models, and the M first distances correspond one-to-one to the M artificial intelligence algorithm models.

In this way, the artificial intelligence algorithm model that is more applicable to the first data may be selected by calculating a distance between the feature of the first data and the feature of the artificial intelligence algorithm model.

When all the M first distances are greater than a first threshold, N is 0; or when at least one of the M first distances is less than or equal to a first threshold, N is not 0. The first threshold may be configured by the network device for the terminal device.

In a possible implementation, the method provided in the third aspect may further include: The terminal device sends a model request to the network device, where the model request may be used to request a model for processing the first data pre-obtained by the terminal device; and the model request may include at least one of identifiers of the N artificial intelligence algorithm models and L first distances, the L first distances are distances between features of the L artificial intelligence algorithm models and the feature of the first data, the L artificial intelligence algorithm models include the N artificial intelligence algorithm models, and L is an integer greater than or equal to N and less than or equal to M.

In a possible implementation, the downlink channel state information CSI may be represented by using a first dimension, a second dimension, and a third dimension, where the first dimension corresponds to a quantity of carriers or a quantity of sub-bands, the second dimension corresponds to a quantity of antenna ports or a quantity of radio frequency chains of the network device, and the third dimension represents a real part and an imaginary part.

In a possible implementation, that the downlink channel state information CSI is represented by using a first dimension, a second dimension, and a third dimension may include: The downlink channel state information CSI is represented by using the first dimension, the second dimension, the third dimension, and a fourth dimension, where the fourth dimension corresponds to a quantity of antennas of the terminal device.

In a possible implementation, the method provided in the third aspect may further include: receiving, from the network device, configuration information corresponding to at least one of the N artificial intelligence algorithm models or configuration information corresponding to at least one of the L artificial intelligence algorithm models, where the configuration information may be used to configure one or more of the following: the artificial intelligence algorithm model, a parameter of the artificial intelligence algorithm model, and a manner of obtaining the artificial intelligence algorithm model.

In a possible implementation, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

In a possible implementation, N first distances are N first distances having smallest values in M first distances, the first distance is a distance between the feature of the artificial intelligence algorithm model and the feature of the first data, the N first distances correspond one-to-one to the N artificial intelligence algorithm models, and the M first distances correspond one-to-one to the M artificial intelligence algorithm models.

In a possible implementation, the first distance may include but is not limited to one or more of the following: a cosine similarity, a Euclidean distance, a Manhattan distance, a standard Euclidean distance, a squared Euclidean distance, a Canberra distance, a Chebyshev distance, a correlation distance, a Markov distance, and a Minkowski distance.

In addition, for technical effects of the method according to the third aspect, refer to the technical effects of the method according to any possible implementation of the first aspect. Details are not described herein again.

According to a fourth aspect, an AI algorithm model obtaining method is provided. The method includes: A network device obtains M pieces of model feature information, and sends a first message to a terminal device, where the M pieces of model feature information correspond one-to-one to M artificial intelligence algorithm models stored in a network device or stored in a device (for example, a server) corresponding to the network device, an i^{th} piece of model feature information in the M pieces of model feature information includes a feature of an i^{th} artificial intelligence algorithm model, the i^{th} piece of model feature information is determined based on features of K pieces of training data, the K pieces of training data are training data of the i^{th} artificial intelligence algorithm model, M is a positive integer greater than or equal to 1, i is any positive integer less than or equal to M, and K is a positive integer greater than or equal to 1; the first message includes the M pieces of model feature information; and the M artificial intelligence algorithm models are models that are capable of processing first data pre-obtained by the terminal device, and the first data is data to be processed by using the artificial intelligence algorithm model stored in the network device.

In a possible implementation, a feature of one of the K pieces of training data is obtained in a first manner, where the first manner includes a first processing process, and the first processing process includes histogram statistics collection.

In a possible implementation, the first message may further include at least one of first indication information and second indication information, where
the first indication information may indicate a process of obtaining the data feature information, and
the second indication information may indicate a manner of obtaining the data feature information.

In a possible implementation, the first manner may further include a second processing process and/or a third processing process, where the second processing process is a processing process before the first processing process, and the third processing process is a processing process after the first processing process.

In a possible implementation, the method provided in the fourth aspect may further include: receiving a model request from the terminal device, where the model request may be used to request a model for processing the first data pre-obtained by the terminal device; and the model request may include at least one of identifiers of N artificial intelligence algorithm models and L first distances, the L first distances are distances between features of L artificial intelligence algorithm models and a feature of the first data, the L artificial intelligence algorithm models include the N artificial intelligence algorithm models, and L is an integer greater than or equal to N and less than or equal to M.

In a possible implementation, that the i^{th} piece of model feature information is determined based on features of K pieces of training data may include:
The i^{th} piece of model feature information is determined based on a sum of the features of the K pieces of training data, or the model feature information is determined based on an average value of the features of the K pieces of training data.

In a possible implementation, the first message may further include configuration information respectively corresponding to the M artificial intelligence algorithm models, and the configuration information may be used to configure one or more of the following: an artificial intelligence algorithm model, a parameter of the artificial intelligence algorithm model, and a manner of obtaining the artificial intelligence algorithm model.

In a possible implementation, the method provided in the fourth aspect may further include: when a first condition is satisfied, sending, to the terminal device, configuration information corresponding to at least one of the N artificial intelligence algorithm models or configuration information corresponding to at least one of the L artificial intelligence algorithm models, where the configuration information may be used to configure one or more of the following: the artificial intelligence algorithm model, the parameter of the artificial intelligence algorithm model, and the manner of obtaining the artificial intelligence algorithm model.

Optionally, the first condition includes that N is greater than or equal to 1.

In a possible implementation, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

In addition, for technical effects of the method according to the fourth aspect, refer to the technical effects of the method according to any possible implementation of the first aspect. Details are not described herein again.

According to a fifth aspect, a communication apparatus is provided. The communication apparatus includes a transceiver module and a processing module, where
the processing module is configured to obtain M pieces of model feature information; the transceiver module is configured to receive data feature information from a terminal device; the processing module is further configured to determine N artificial intelligence algorithm models in M artificial intelligence algorithm models based on the data feature information and the M pieces of model feature information; and the transceiver module is further configured to: when a first condition is satisfied, send configuration information corresponding to at least one of the N artificial intelligence algorithm models to the terminal device, where the M pieces of model feature information correspond one-to-one to the M artificial intelligence algorithm models stored in the communication apparatus or stored in a server corresponding to the communication apparatus, an i^{th} piece of model feature information in the M pieces of model feature information includes a feature of an i^{th} artificial intelligence algorithm model, and the M artificial intelligence algorithm models are models that are capable of processing first data pre-obtained by the terminal device; the first data is data to be processed by using the artificial intelligence algorithm model stored in the communication apparatus; the N artificial intelligence algorithm models are more suitable for processing the data than remaining (M-N) artificial intelligence algorithm models of the M artificial intelligence algorithm models; the data feature information includes a feature of the first data; and the configuration information is used to configure one or more of the following: the artificial intelligence algorithm model, a parameter of the artificial intelligence algorithm model, and a manner of obtaining the artificial intelligence algorithm model, where M is a positive integer greater than or equal to 1, N is an integer greater than or equal to 0 and less than or equal to M, and i is any positive integer less than or equal to M.

Optionally, the first condition includes that N is greater than or equal to 1.

In a possible implementation, the i^{th} piece of model feature information may be determined based on features of K pieces of training data, the K pieces of training data are training data of the i^{th} artificial intelligence algorithm model, and K is an integer greater than or equal to 1.

In a possible implementation, that the i^{th} piece of model feature information is determined based on features of K pieces of training data may include: The i^{th} piece of model feature information is determined based on a sum of the features of the K pieces of training data, or the model feature information is determined based on an average value of the features of the K pieces of training data.

In a possible implementation, a feature of one of the K pieces of training data is obtained in a first manner, where the first manner includes a first processing process, and the first processing process includes histogram statistics collection.

In a possible implementation, the first manner further includes a second processing process and/or a third processing process, where the second processing process is a processing process before the first processing process, and the third processing process is a processing process after the first processing process.

In a possible implementation, the transceiver module is further configured to send a data feature request to the terminal device, where the data feature request is used to request data feature information.

In a possible implementation, the data feature request may include at least one of first indication information and second indication information, where
the first indication information may indicate a process of obtaining the data feature information, and
the second indication information may indicate a manner of obtaining the data feature information.

In a possible implementation, the second processing process may include but is not limited to one or more of the following: Fourier transform, fast Fourier transform (fast Fourier transform, FFT), discrete Fourier transform (discrete Fourier transform, DFT), data truncation, coordinate conversion, noise reduction, normalization, grayscale, data correction (for example, gamma correction), quantization, singular value decomposition (singular value decomposition, SVD), translation, data augmentation (data augmentation), gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

In a possible implementation, the first condition includes that N is greater than or equal to 1.

In a possible implementation, N first distances are N first distances having smallest values in M first distances, the first distance is a distance between the feature of the artificial intelligence algorithm model and the feature of the first data, the N first distances correspond one-to-one to the N artificial intelligence algorithm models, and the M first distances correspond one-to-one to the M artificial intelligence algorithm models; and
when all the M first distances are greater than a first threshold, N is 0; or when at least one of the M first distances is less than or equal to a first threshold, N is not 0; and the first threshold may be preset by the communication apparatus.

In a possible implementation, the first distance may include but is not limited to one or more of the following: a cosine similarity, a Euclidean distance, a Manhattan distance, a standard Euclidean distance, a squared Euclidean distance, a Canberra distance, a Chebyshev distance, a correlation distance, a Markov distance, and a Minkowski distance.

In a possible implementation, the transceiver module is further configured to receive data feature information, and third indication information and/or fourth indication information from the terminal device, where the third indication information indicates a process of obtaining the data feature information; and the fourth indication information indicates a manner of obtaining the data feature information.

In a possible implementation, the processing module is further configured to obtain M pieces of model feature information based on the third indication information and/or the fourth indication information.

It should be noted that, the transceiver module according to the fifth aspect may include a receiving module and a sending module. The receiving module is configured to receive data and/or signaling from the terminal device, and the sending module is configured to send data and/or signaling to the terminal device. A specific implementation of the transceiver module is not specifically limited in this application.

Optionally, the communication apparatus according to the fifth aspect may further include a storage module, and the storage module stores a program or instructions. When the processing module executes the program or the instructions, the communication apparatus according to the fifth aspect can perform the method according to the first aspect.

It should be noted that the communication apparatus according to the fifth aspect may be a network device, or may be a chip (system) or another component or assembly that can be disposed in the network device. This is not limited in this application.

In addition, for technical effects of the communication apparatus according to the fifth aspect, refer to the technical effects of the method according to any possible implementation of the first aspect. Details are not described herein again.

According to a sixth aspect, a communication apparatus is provided. The communication apparatus includes a transceiver module and a processing module, where
the processing module is configured to process pre-obtained first data in a first manner, to obtain data feature information; the transceiver module is configured to send the data feature information to a network device; and the transceiver module is further configured to receive configuration information corresponding to at least one of N artificial intelligence algorithm models from the network device, where the first data is data to be processed by using the artificial intelligence algorithm model stored in the network device; the first manner includes a first processing process, and the first processing process includes histogram statistics collection; and the configuration information is used to configure one or more of the following: the artificial intelligence algorithm model, a parameter of the artificial intelligence algorithm model, and a manner of obtaining the artificial intelligence algorithm model.

In a possible implementation, the first data may be determined based on downlink channel state information CSI.

In a possible implementation, the first manner may further include a second processing process and/or a third processing process, where the second processing process may be a processing process before the first processing process, and the third processing process may be a processing process after the first processing process.

In a possible implementation, the transceiver module is further configured to receive a data feature request from the network device, where the data feature request is used to request the data feature information.

In a possible implementation, the data feature request includes at least one of first indication information and second indication information, where
the first indication information indicates a process of obtaining the data feature information; and
the second indication information indicates a manner of obtaining the data feature information.

In a possible implementation, the processing module is further configured to process the pre-obtained first data in the first manner based on the first indication information and/or the second indication information, to obtain the data feature information.

In a possible implementation, the transceiver module is further configured to send the data feature information, and third indication information and/or fourth indication information to the network device, where the third indication information indicates a process of obtaining the data feature information; and the fourth indication information indicates a manner of obtaining the data feature information.

In a possible implementation, the downlink channel state information CSI is represented by using a first dimension, a second dimension, and a third dimension, where the first dimension corresponds to a quantity of carriers or a quantity of sub-bands, the second dimension corresponds to a quantity of antenna ports or a quantity of radio frequency chains of the network device, and the third dimension represents a real part and an imaginary part.

In a possible implementation, that the downlink channel state information CSI is represented by using a first dimension, a second dimension, and a third dimension may include: The downlink channel state information CSI is represented by using the first dimension, the second dimension, the third dimension, and a fourth dimension, where the fourth dimension corresponds to a quantity of antennas of the communication apparatus.

In a possible implementation, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

It should be noted that, the transceiver module according to the sixth aspect may include a receiving module and a sending module. The receiving module is configured to receive data and/or signaling from the network device, and the sending module is configured to send data and/or signaling to the network device. A specific implementation of the transceiver module is not specifically limited in this application.

Optionally, the communication apparatus according to the sixth aspect may further include a storage module, and the storage module stores a program or instructions. When the processing module executes the program or the instructions, the communication apparatus according to the sixth aspect can perform the method according to the second aspect.

It should be noted that the communication apparatus according to the sixth aspect may be a terminal device, or may be a chip (system) or another component or assembly that can be disposed in the terminal device. This is not limited in this application.

In addition, for technical effects of the communication apparatus according to the sixth aspect, refer to the technical effects of the method according to any possible implementation of the second aspect. Details are not described herein again.

According to a seventh aspect, a communication apparatus is provided. The communication apparatus includes a transceiver module and a processing module, where
the transceiver module is configured to receive a first message from a network device; the processing module is configured to obtain data feature information; and the processing module is further configured to determine N artificial intelligence algorithm models in M artificial intelligence algorithm models based on the data feature information and M pieces of model feature information, where the first message includes the M pieces of model feature information, the M pieces of model feature information correspond one-to-one to the M artificial intelligence algorithm models stored in the network device or stored in a device (for example, a server) corresponding to the network device, an i^{th} piece of model feature information in the M pieces of model feature information includes a feature of an i^{th} artificial intelligence algorithm model, and the M artificial intelligence algorithm models are models that are capable of processing first data pre-obtained by the communication apparatus; the first data is data to be processed by using the artificial intelligence algorithm model stored in the network device; the data feature information includes a feature of the first data; and the N artificial intelligence algorithm models are more suitable for processing the data than remaining (M-N) artificial intelligence algorithm models of the M artificial intelligence algorithm models, where M is a positive integer greater than or equal to 1, N is an integer greater than or equal to 0 and less than or equal to M, and i is any positive integer less than or equal to M.

In a possible implementation, the data feature information may be obtained in a first manner, where the first manner includes a first processing process, and the first processing process may include histogram statistics collection.

In a possible implementation, the first data may be determined based on downlink channel state information CSI.

In a possible implementation, the first manner may further include a second processing process and/or a third processing process, where the second processing process is a processing process before the first processing process, and the third processing process is a processing process after the first processing process.

In a possible implementation, when a first condition is satisfied, the processing module processes the data by using at least one of the N artificial intelligence algorithm models.

In a possible implementation, the first condition includes that N is greater than or equal to 1.

In a possible implementation, the first message further includes at least one of first indication information and second indication information, where
the first indication information may indicate a process of obtaining the data feature information, and
the second indication information may indicate a manner of obtaining the data feature information.

In a possible implementation, the first message may further include configuration information respectively corresponding to the M artificial intelligence algorithm models, and the configuration information may be used to configure one or more of the following: an artificial intelligence algorithm model, a parameter of the artificial intelligence algorithm model, and a manner of obtaining the artificial intelligence algorithm model.

In a possible implementation, the transceiver module is further configured to send a model request to the network device, where the model request may be used to request a model for processing the first data; and the model request may include at least one of identifiers of the N artificial intelligence algorithm models and L first distances, the L first distances are distances between features of L artificial intelligence algorithm models and the feature of the first data, the L artificial intelligence algorithm models include the N artificial intelligence algorithm models, and L is an integer greater than or equal to N and less than or equal to M.

In a possible implementation, the downlink channel state information CSI may be represented by using a first dimension, a second dimension, and a third dimension, where the first dimension corresponds to a quantity of carriers or a quantity of sub-bands, the second dimension corresponds to a quantity of antenna ports or a quantity of radio frequency chains of the network device, and the third dimension represents a real part and an imaginary part.

In a possible implementation, that the downlink channel state information CSI is represented by using a first dimension, a second dimension, and a third dimension may include: The downlink channel state information CSI is represented by using the first dimension, the second dimension, the third dimension, and a fourth dimension, where the fourth dimension corresponds to a quantity of antennas of the communication apparatus.

In a possible implementation, the method provided in the seventh aspect may further include: receiving, from the network device, configuration information corresponding to at least one of the N artificial intelligence algorithm models or configuration information corresponding to at least one of the L artificial intelligence algorithm models, where the configuration information may be used to configure one or more of the following: the artificial intelligence algorithm model, a parameter of the artificial intelligence algorithm model, and a manner of obtaining the artificial intelligence algorithm model.

In a possible implementation, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

In a possible implementation, N first distances are N first distances having smallest values in M first distances, the first distance is a distance between the feature of the artificial intelligence algorithm model and the feature of the first data, the N first distances correspond one-to-one to the N artificial intelligence algorithm models, and the M first distances correspond one-to-one to the M artificial intelligence algorithm models.

In a possible implementation, the first distance may include but is not limited to one or more of the following: a cosine similarity, a Euclidean distance, a Manhattan distance, a standard Euclidean distance, a squared Euclidean distance, a Canberra distance, a Chebyshev distance, a correlation distance, a Markov distance, and a Minkowski distance.

It should be noted that, the transceiver module according to the seventh aspect may include a receiving module and a sending module. The receiving module is configured to receive data and/or signaling from the network device, and the sending module is configured to send data and/or signaling to the network device. A specific implementation of the transceiver module is not specifically limited in this application.

Optionally, the communication apparatus according to the seventh aspect may further include a storage module, and the storage module stores a program or instructions. When the processing module executes the program or the instructions, the communication apparatus according to the seventh aspect can perform the method according to the third aspect.

It should be noted that the communication apparatus according to the seventh aspect may be a terminal device, or may be a chip (system) or another component or assembly that can be disposed in the terminal device. This is not limited in this application.

In addition, for technical effects of the communication apparatus according to the seventh aspect, refer to the technical effects of the method according to any possible implementation of the third aspect. Details are not described herein again.

According to an eighth aspect, a communication apparatus is provided. The communication apparatus includes a transceiver module and a processing module, where
the processing module is configured to obtain M pieces of model feature information; and the transceiver module is configured to send a first message to a terminal device, where the M pieces of model feature information correspond one-to-one to M artificial intelligence algorithm models stored in the communication apparatus or stored in a device (for example, a server) corresponding to the ommunication apparatus, an i^{th} piece of model feature information in the M pieces of model feature information includes a feature of an i^{th} artificial intelligence algorithm model, the i^{th} piece of model feature information in the M pieces of model feature information is determined based on features of K pieces of training data, the K pieces of training data are training data of the i^{th} artificial intelligence algorithm model, M is a positive integer greater than or equal to 1, i is any positive integer less than or equal to M, and K is a positive integer greater than or equal to 1; the first message includes the M pieces of model feature information; and the M artificial intelligence algorithm models are models that are capable of processing first data pre-obtained by the terminal device, and the first data is data to be processed by using the artificial intelligence algorithm model stored in the communication apparatus.

In a possible implementation, a feature of one of the K pieces of training data is obtained in a first manner, where the first manner includes a first processing process, and the first processing process includes histogram statistics collection.

In a possible implementation, the first message may further include at least one of first indication information and second indication information, where
the first indication information may indicate a process of obtaining the data feature information, and
the second indication information may indicate a manner of obtaining the data feature information.

In a possible implementation, the first manner may further include a second processing process and/or a third processing process, where the second processing process is a processing process before the first processing process, and the third processing process is a processing process after the first processing process.

In a possible implementation, the transceiver module is further configured to receive a model request from the terminal device, where the model request may be used to request a model for processing the first data pre-obtained by the terminal device; and the model request may include at least one of identifiers of the N artificial intelligence algorithm models and L first distances, the L first distances are distances between features of L artificial intelligence algorithm models and a feature of the first data, the L artificial intelligence algorithm models include the N artificial intelligence algorithm models, and L is an integer greater than or equal to N and less than or equal to M.

In a possible implementation, that the i^{th} piece of model feature information is determined based on features of K pieces of training data may include:
The i^{th} piece of model feature information is determined based on a sum of the features of the K pieces of training data, or the model feature information is determined based on an average value of the features of the K pieces of training data.

In a possible implementation, the first message may further include configuration information respectively corresponding to the M artificial intelligence algorithm models, and the configuration information may be used to configure one or more of the following: an artificial intelligence algorithm model, a parameter of the artificial intelligence algorithm model, and a manner of obtaining the artificial intelligence algorithm model.

In a possible implementation, the transceiver module is further configured to: when a first condition is satisfied, send, to the terminal device, configuration information corresponding to at least one of the N artificial intelligence algorithm models or configuration information corresponding to at least one of the L artificial intelligence algorithm models, where the configuration information may be used to configure one or more of the following: the artificial intelligence algorithm model, a parameter of the artificial intelligence algorithm model, and a manner of obtaining the artificial intelligence algorithm model.

Optionally, the first condition includes that N is greater than or equal to 1.

In a possible implementation, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

In a possible implementation, the third processing process may include but is not limited to one or more of the following: normalization, feature combining, dimension reduction, quantization, and encoding.

In a possible implementation, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

It should be noted that, the transceiver module according to the eighth aspect may include a receiving module and a sending module. The receiving module is configured to receive data and/or signaling from a terminal device, and the sending module is configured to send data and/or signaling to the terminal device. A specific implementation of the transceiver module is not specifically limited in this application.

Optionally, the communication apparatus according to the eighth aspect may further include a storage module, and the storage module stores a program or instructions. When the processing module executes the program or the instructions, the communication apparatus according to the eighth aspect can perform the method according to the fourth aspect.

It should be noted that the communication apparatus according to the eighth aspect may be a network device, or may be a chip (system) or another component or assembly that can be disposed in the network device. This is not limited in this application.

In addition, for technical effects of the communication apparatus according to the eighth aspect, refer to the technical effects of the method according to any possible implementation of the fourth aspect. Details are not described herein again.

According to a ninth aspect, a communication apparatus is provided. The communication apparatus includes a processor. The processor is coupled to a memory, and the memory is configured to store a computer program.

The processor is configured to execute the computer program stored in the memory, so that the method according to any possible implementation of the first aspect to the fourth aspect is performed.

In a possible design, the communication apparatus according to the ninth aspect may further include a transceiver. The transceiver may be a transceiver circuit or an input/output port. The transceiver may be used by the communication apparatus to communicate with another device.

It should be noted that, the input port may be configured to implement a receiving function in the first aspect to the fourth aspect, and the output port may be configured to implement a sending function in the first aspect to the fourth aspect.

In this application, the communication apparatus according to the ninth aspect may be a terminal device or a network device, or a chip or a chip system disposed inside the terminal device or the network device.

In addition, for technical effects of the communication apparatus according to the ninth aspect, refer to the technical effects of the method according to any possible implementation of the first aspect. Details are not described herein again.

According to a tenth aspect, a communication system is provided. The communication system includes the communication apparatus according to the fifth aspect and the communication apparatus according to the sixth aspect. Alternatively, the communication system includes the communication apparatus according to the seventh aspect and the communication apparatus according to the eighth aspect.

According to an eleventh aspect, a chip system is provided. The chip system includes a logic circuit and an input/output port. The logic circuit is configured to implement the processing functions in the first aspect to the fourth aspect, and the input/output port is configured to implement the receiving and sending functions in the first aspect to the fourth aspect. Specifically, the input port may be configured to implement the receiving functions in the first aspect to the fourth aspect, and the output port may be configured to implement the sending function in the first aspect to the fourth aspect.

In a possible design, the chip system further includes a memory, and the memory is configured to store program instructions and data for implementing functions in the first aspect to the fourth aspect.

The chip system may include a chip; or may include a chip and another discrete component.

According to a twelfth aspect, a computer-readable storage medium is provided. The computer-readable storage medium stores a computer program or instructions. When the computer program runs or the instructions are run on a computer, the method according to any possible implementation of the first aspect to the fourth aspect is performed.

According to a thirteenth aspect, a computer program product is provided. The computer program product includes a computer program or instructions. When the computer program runs or the instructions are run on a computer, the method according to any possible implementation of the first aspect to the fourth aspect is performed.

### BRIEF DESCRIPTION OF DRAWINGS

FIG. 1 is a diagram of an architecture of a communication system according to an embodiment of this application;
FIG. 2 is a schematic flowchart of an algorithm model obtaining method according to an embodiment of this application;
FIG. 3 is a diagram of histogram statistics collection according to an embodiment of this application;
FIG. 4 is a schematic flowchart of another algorithm model obtaining method according to an embodiment of this application;
FIG. 5 is a diagram of a structure of a communication apparatus according to an embodiment of this application; and
FIG. 6 is a diagram of another structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences between the terms are not emphasized.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

For ease of understanding of embodiments of this application, first, a communication system applicable to embodiments of this application is described in detail by using a communication system shown in FIG. 1 as an example.

As shown in FIG. 1, the communication system includes a terminal device and a network device.

The terminal device is a terminal that accesses the communication system and has wireless receiving and sending functions, or a chip or a chip system that may be disposed in the terminal. The terminal device may also be referred to as a user equipment (user equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be a mobile phone (mobile phone), a wireless data card, a personal digital assistant (personal digital assistant, PDA) computer, a laptop computer (laptop computer), a tablet computer (Pad), an unmanned aerial vehicle, a computer having wireless receiving and sending functions, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness products) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) having a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method provided in this application by using the vehicle-mounted module, the vehicle-mounted assembly, the vehicle-mounted component, the vehicle-mounted chip, or the vehicle-mounted unit that is built in the vehicle.

The network device may be one of an access network device and a core network element; or the network device may be a device integrating one or more devices in a core network element and an access network device.

The access network device is a device that is located on a network side of the communication system and that has wireless receiving and sending functions, or a chip or a chip system that may be disposed in the device. The access network device includes but is not limited to an access point (access point, AP) in a wireless fidelity (wireless fidelity, Wi-Fi) system, for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or transmission point, TP), or the like. The access network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The access network device may alternatively be a network node constituting a gNB or a transmission point, for example, a baseband unit (BBU), a distributed unit (distributed unit, DU), or a road side unit (road side unit, RSU) having a base station function. The access network device may alternatively be a satellite, or base stations in various forms in the future.

The core network element may include but is not limited to one or more of the following: a user plane network element, an authentication server, a mobility management network element, a session management network element, a unified data management network element, a policy control network element, a storage function network element, an application network element, and a network exposure network element.

The user plane network element serves as an interface to a data network, and implements functions such as user plane data forwarding, session/flow-level based charging statistics collection, and bandwidth throttling, to be specific, packet routing and forwarding, quality of service (quality of service, QoS) handling for user plane data, or the like. In the 5G communication system, the user plane network element may be a user plane function (user plane function, UPF) network element.

The authentication server is configured to perform security authentication for a user. In the 5G communication system, the authentication server may be an authentication server function (authentication server function, AUSF) network element.

The mobility management network element is mainly configured to perform mobility management, access management, and the like. In the 5G communication system, the access management network element may be an access and mobility management function (access and mobility management function, AMF) network element, and mainly performs functions such as mobility management and access authentication/authorization. In addition, the mobility management network element is further responsible for transferring a user policy between the terminal device and a policy control function (policy control function, PCF) network element.

The session management network element is mainly used for session management (for example, establishment or deletion), maintenance of a session context and user plane forwarding tunnel information, user equipment internet protocol (internet protocol, IP) address allocation and management, selection and control of a user plane function, serve as a termination point of a policy control and charging function interface, downlink data notification, and the like. In the 5G communication system, the session management network element may be a session management function (session management function, SMF) network element, and implements terminal IP address allocation, UPF selection, charging, QoS policy control, and the like.

The unified data management network element is responsible for management of a user identification, subscription data, and authentication data, and serving network element registration management of a user. In the 5G communication system, the unified data management network element may be a unified data management (unified data management, UDM) network element.

The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, an AMF network element or an SMF network element). In the 5G communication system, the policy control network element may be a PCF.

The storage function network element provides a storage function and a selection function of network functional entity information for another core network element. In the 5G communication system, the network element may be a network function repository function (network function repository function, NRF) network element.

The application network element may be configured to provide various services, can interact with a core network through a network exposure function (network exposure function, NEF) network element, and can interact with a policy management framework to perform policy management. In the 5G communication system, the application network element may be an application function (application function, AF) network element, represents an application function of a third party or an operator, is an interface for obtaining external application data in a 5G network, and is mainly configured to transfer a requirement of an application side for a network side.

The network exposure network element may be configured to provide a framework, authentication, and an interface that are related to network capability exposure, and transfers information between a 5G system network function and another network function. In the 5G communication system, the network exposure network element may be a network exposure function (network exposure function, NEF) network element, is mainly configured to expose a service and a capability of a 3GPP network function to the AF, and may further enable the AF to provide information for the 3GPP network function.

Optionally, the communication system shown in FIG. 1 is applicable to a currently discussed communication network, or is applicable to another future network, or the like. This is not specifically limited in embodiments of this application.

It should be noted that, the algorithm model obtaining method provided in embodiments of this application is applicable between the terminal device and the network device shown in FIG. 1. For a specific implementation, refer to the following method embodiments. Details are not described herein again.

It should be noted that, the solutions in embodiments of this application may be further applied to another communication system, and a corresponding name may also be replaced with a name of a corresponding function in the another communication system.

It should be understood that FIG. 1 is merely an example of a simplified diagram for ease of understanding. The communication system may further include another network device and/or another terminal device that are/is not shown in FIG. 1.

A scenario in which the terminal device needs to encode data by using an AI algorithm model, and send encoded data to the network device is used as an example. The network device sends, to the terminal device, the AI algorithm model (for example, an AI encoder) used for encoding, and the terminal device encodes the data by using the AI encoder, and feeds back the encoded data to the network device. The network device decodes the encoded data by using an AI decoder, to obtain decoded data. In some embodiments, applicability between the AI encoder and the data may be determined based on the following solution 1 or solution 2.

Solution 1: The network device sends the AI encoder and the AI decoder to the terminal device. After encoding the data by using the AI encoder, the terminal device decodes the encoded data by using the AI decoder, to obtain the decoded data, and compares the decoded data with the original data, to determine applicability between the to-be-inferred data and the AI encoder. In the solution 1, the network device needs to deliver the additional AI decoder to the terminal device, and the terminal device needs to additionally perform a decoding operation. Consequently, complexity is increased and power consumption is wasted.

Solution 2: After encoding the data by using the AI encoder, the terminal device sends the encoded data and the original data to the network device. The network device decodes the encoded data by using the AI decoder, to obtain the decoded data, and compares the decoded data with the original data, to determine applicability between the to-be-inferred data and the AI encoder. In the solution 2, the terminal device needs to feed back the original data to the network device, to increase air interface transmission load.

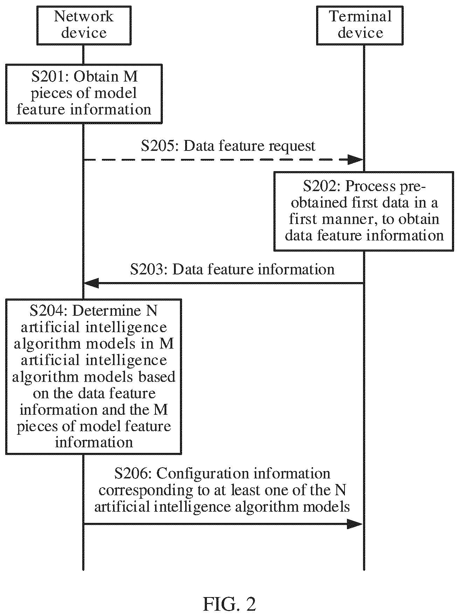

In the methods provided in FIG. 2 to FIG. 4 in this application, a network device or a terminal device determines N artificial intelligence algorithm models in M artificial intelligence algorithm models based on a feature of first data and M pieces of model feature information, and sends, to the terminal device when a first condition is satisfied, configuration information corresponding to at least one of the N artificial intelligence algorithm models. In comparison with remaining (M-N) artificial intelligence algorithm models in the M artificial intelligence algorithm models, the N artificial intelligence algorithm models are more suitable for processing the data, the M pieces of model feature information correspond one-to-one to the M artificial intelligence algorithm models, and the model feature information includes a feature of the artificial intelligence algorithm model. In this way, accurate matching between the artificial intelligence algorithm model and the data can be implemented, and a more applicable artificial intelligence algorithm model can be obtained for the data. In addition, no additional information (for example, an AI decoder or original data) needs to be transmitted between the network device and the terminal device. The solution is simple. The accurate matching between the artificial intelligence algorithm model and the data can be implemented through lightweight data transmission and calculation.

Optionally, the first condition includes that N is greater than or equal to 1.

The following describes in detail the algorithm model obtaining method provided in embodiments of this application with reference to FIG. 2 to FIG. 4. The method provided in embodiments of this application is applicable to a scenario in which to-be-processed data and an AI algorithm model are carried on different devices.

For example, FIG. 2 is a schematic flowchart of an algorithm model obtaining method according to an embodiment of this application. FIG. 2 is described by using an example in which a network device selects an applicable artificial intelligence algorithm model for first data.

As shown in FIG. 2, the algorithm model obtaining method includes the following steps.

S201: The network device obtains M pieces of model feature information.

For example, the M pieces of model feature information correspond one-to-one to M artificial intelligence algorithm models stored in the network device or stored in a device (for example, a server) corresponding to the network device, where M is an integer greater than or equal to 1. In this way, the network device may obtain the model feature information respectively corresponding to the M AI algorithm models.

For example, an i^{th} piece of model feature information in the M pieces of model feature information includes a feature of an i^{th} artificial intelligence algorithm model, where i is any positive integer less than or equal to M.

For example, M=2 is used as an example, and the M pieces of model feature information include model feature information 1 and model feature information 2. Model feature information 1 includes a feature of artificial intelligence algorithm model 1, and model feature information 2 includes a feature of artificial intelligence algorithm model 2.

For example, the M artificial intelligence algorithm models are models that are capable of processing the first data.

In other words, each of the M artificial intelligence algorithm models can process the first data, for example, encode the first data.

It should be noted that the artificial intelligence algorithm model is not limited in this embodiment of this application. Corresponding to different application scenarios, the artificial intelligence algorithm model may be an algorithm model having different functions.

For example, the artificial intelligence algorithm model may be an algorithm model used to encode CSI.

Optionally, the first data may be data to be processed by using the artificial intelligence algorithm model stored in the network device.

Optionally, the first data may be pre-obtained by a terminal device.

For example, the first data may be data that is in the terminal device and that is to be processed with application of the artificial intelligence algorithm model.

Optionally, the first data may be determined based on downlink channel state information. Alternatively, the first data may be positioning-related data.

Similar to the artificial intelligence algorithm model, the first data is not limited in this embodiment of this application. Corresponding to different application scenarios, the first data may be different.

For example, the first data may be determined based on the CSI. For example, the first data may include the CSI.

In some embodiments, the i^{th} piece of model feature information may be determined based on features of K pieces of training data.

Optionally, the K pieces of training data may be training data of the i^{th} artificial intelligence algorithm model, where K is an integer greater than or equal to 1.

For example, the i^{th} artificial intelligence algorithm model may be a neural network trained based on the K pieces of training data.

For example, M=2 is used as an example, and the M pieces of model feature information include model feature information 1 and model feature information 2. Model feature information 1 may be determined based on a feature of one or more pieces of training data corresponding to artificial intelligence algorithm model 1, and model feature information 2 may be determined based on a feature of one or more pieces of training data corresponding to artificial intelligence algorithm model 2. It should be noted that a quantity of pieces of training data corresponding to artificial intelligence algorithm model 1 may be the same as or different from a quantity of pieces of training data corresponding to artificial intelligence algorithm model 2. This is not limited in this application.

In other words, a feature of an artificial intelligence algorithm model may be determined based on a feature of training data corresponding to the artificial intelligence algorithm model.

Optionally, that the i^{th} piece of model feature information is determined based on features of K pieces of training data may include: The i^{th} piece of model feature information may be determined based on a sum of the features of the K pieces of training data, or the model feature information may be determined based on an average value of the features of the K pieces of training data.

In some embodiments, a feature of one of the K pieces of training data may be obtained in a first manner.

In other words, the feature of the training data may be obtained in the first manner.

Optionally, the first manner may include a first processing process, and the first processing process may include histogram (histogram) statistics collection.

For example, the histogram statistics collection may be performed on the training data to obtain the feature of the training data.

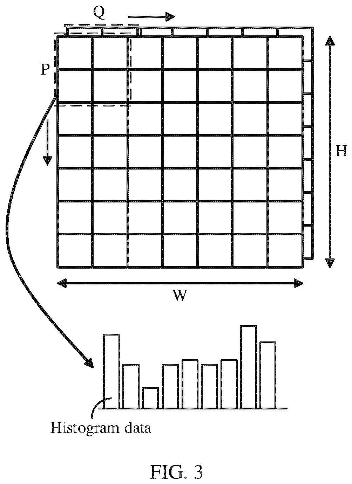

FIG. 3 is a diagram of histogram statistics collection according to an embodiment of this application.

With reference to FIG. 3, it is assumed that the training data is three-dimensional data, for example, a dimension is WxHxD, where W and H may be information related to the training data, D may be 2, and D represents a real part and an imaginary part. The training data is traversed by using a cell P×Q×T as a unit, where 1≤P≤W, 1≤Q≤H, and 1≤T≤D. In a traversal process, overlapping may be present or absent, and histogram statistics collection is performed for each cell P×Q×T, to obtain histogram data, where all obtained histogram data forms a feature (matrix or vector) of the training data. The histogram data may be based on a value of each element in the cell P×Q×T, or may be based on a direction and intensity of each element in the cell P×Q×T.

It should be noted that the dimension of the training data is not limited in this application, and FIG. 3 is merely an example provided in this application.

The feature that is of the training data and that is obtained based on the histogram statistics collection includes richer information, and the feature of the training data can accurately reflect the artificial intelligence algorithm model, so that a more accurate matching evaluation result (applicability between the data and the artificial intelligence algorithm model) can be obtained.

In some embodiments, the first manner may further include a second processing process and/or a third processing process, where the second processing process is a processing process before the first processing process, and the third processing process is a processing process after the first processing process.

For example, the feature of the training data may be obtained based on the first processing process, the feature of the training data may be obtained based on the second processing process and the first processing process, the feature of the training data may be obtained based on the first processing process and the third processing process, or the feature of the training data may be obtained based on the first processing process, the second processing process, and the third processing process.

In some embodiments, the second processing process may include but is not limited to one or more of the following: Fourier transform, fast Fourier transform FFT, discrete Fourier transform DFT, data truncation, coordinate conversion, noise reduction, normalization, grayscale, data correction (for example, gamma correction), quantization, singular value decomposition SVD, translation, data augmentation, gradient calculation, feature template filtering, partial selection, and combining of a plurality of processing results.

Optionally, the gradient calculation may include a binarization gradient in a local binary pattern algorithm.

Optionally, the feature template filtering may include performing a Sobel operator (Sobel operator) operation on the data (for example, the feature), obtaining Haar-like features (Haar-like features) through calculation, and/or obtaining an edge in the data by using a canny edge detection algorithm, and the like.

Optionally, the partial selection may include: extracting a region of interest (region of interest, ROI) by using a method such as scale-invariant feature transformation.

Optionally, the combining of a plurality of processing results may include: combining training data obtained through calculation by using a plurality of different Sobel operators.

It should be noted that, when the second processing process includes a plurality of the foregoing processes, an execution sequence of the Fourier transform, FFT, DFT, data truncation, coordinate conversion, noise reduction, normalization, grayscale, data correction (for example, gamma correction), quantization, SVD, translation, data augmentation, gradient calculation, feature template filtering, partial selection, and combining of a plurality of processing results is not limited in this application.

In some embodiments, the third processing process may include but is not limited to one or more of the following: normalization, feature combining, dimension reduction, quantization, and encoding.

Optionally, histogram data based on a single cell or a plurality of cells may be obtained through the normalization.

Optionally, the feature combining may include a histogram feature combination obtained by using a plurality of scales (for example, generating a plurality of images of different scales through preprocessing interpolation or dimension reduction, and then separately extracting features) or different configurations (for example, cells of different sizes).

Optionally, the dimension reduction may include but is not limited to one or more of the following: combining and summing up histogram data (data obtained through the histogram statistics collection), and compressing a dimension of the histogram data by using a feature dimension reduction method.

For example, fewer feature dimensions may be obtained by combining and summing up the histogram data.

For example, the combining and summing up the histogram data may include: summing up rows and columns of a matrix of the histogram data respectively in a deformable part model algorithm.

Optionally, the feature dimension reduction method may include but is not limited to: principal component analysis (principal component analysis, PCA) and linear discriminant analysis (linear discriminant analysis, LDA).

In some embodiments, the first manner may be a histogram of oriented gradients HOG, a local binary pattern LBP, an edge orientation histogram EOH, an edge histogram descriptor EHD, an edge direction histogram EDH, a deformable part model DPM, scale-invariant feature transformation SIFT, or speeded up robust features SURF.

For example, in addition to the first processing process, the HOG method further includes the second processing process such as the grayscale and gradient calculation, and the third processing process such as the normalization. Similarly, the local binary pattern LBP method includes the first processing process, and further includes the second processing process and the third processing process. Details are not described in this application.

In this way, before the histogram statistics collection is performed on the training data, the second processing process is used to process the training data, and/or after the histogram statistics collection is performed on the training data, the third processing process is used to process a result of the histogram statistics collection. This can further improve accuracy of the feature of the training data.

In some embodiments, that the network device obtains M pieces of model feature information in S201 may include: The network device receives the M pieces of model feature information.

In other words, the model feature information is received by the network device from another device.

A manner in which the network device obtains the model feature information is not limited in this application. The model feature information may be determined by the network device, or may be received by the network device from another device.

S202: The terminal device processes the pre-obtained first data in the first manner, to obtain data feature information.

For example, the data feature information may include a feature of the first data.

Optionally, the first data may be determined based on downlink channel state information.

In some embodiments, the downlink channel state information may be represented by using a first dimension, a second dimension, and a third dimension.

Optionally, the first dimension corresponds to a quantity of carriers or a quantity of sub-bands, the second dimension corresponds to a quantity of antenna ports or a quantity of radio frequency chains of the network device, and the third dimension represents a real part and an imaginary part.

In some embodiments, that the downlink channel state information is represented by using a first dimension, a second dimension, and a third dimension may include: The downlink channel state information is represented by using the first dimension, the second dimension, the third dimension, and a fourth dimension.

Optionally, the fourth dimension corresponds to a quantity of antennas of the terminal device.

For example, it is assumed that the first dimension is represented by using W, the second dimension is represented by using H, the third dimension is represented by using D, and the fourth dimension is represented by using A, where A is an integer greater than 1 (when A is equal to 1, the downlink channel state information is represented by using the first dimension, the second dimension, and the third dimension). The terminal device may obtain A groups of pieces of downlink channel state information. For an example of the downlink channel state information, refer to the following manner a, manner b, or manner c.

Manner a: The downlink channel state information may be data of W×H×(D×A), W×(H×A)×D, or (W×A)×H×D, and any one of the first dimension, the second dimension, and the third dimension may be extended to A times.

Manner b: The downlink channel state information may be data of W×H×D×A, and the downlink channel state information may be represented by using four-dimensional data.

Manner c: The downlink channel state information may include data of A groups of W×H×D.

In some embodiments, the first manner may include the first processing process, and the first processing process may include the histogram statistics collection.

With reference to FIG. 3, for example, the downlink channel state information may be represented by using the first dimension, the second dimension, and the third dimension. It is assumed that the first dimension is W, the second dimension is H, the third dimension is D, and the downlink channel state information may be W×H×D. The downlink channel state information is traversed by using a cell P×Q×T as a unit, where 1≤P≤W, 1≤Q≤H, and 1≤T≤D. In a traversal process, overlapping may be present or absent, and histogram statistics collection is performed for each cell P×Q×T to obtain histogram data, where all obtained histogram data forms a feature (matrix or vector) of the downlink channel state information. The histogram data may be based on a value of each element in the cell P×Q×T, or may be based on a direction and intensity of each element in the cell P×Q×T.

When the downlink channel state information is the data of W×H×(D×A), W×(H×A)×D, or (W×A)×H×D, for an implementation of obtaining the feature of the downlink channel state information based on the first processing process, refer to a corresponding implementation when the downlink channel state information is represented by using the first dimension, the second dimension, and the third dimension.

An example in which the downlink channel state information is the data of W×H×(D×A) is used. The downlink channel state information is traversed by using a cell P×Q×T as a unit, where 1≤P≤W, 1≤Q≤H, and 1≤T≤D×A. In a traversal process, overlapping may be present or absent, and histogram statistics collection is performed for each cell P×Q×T. Details are not described herein again.

When the downlink channel state information is the data of W×H×D×A, for an implementation of obtaining the feature of the downlink channel state information based on the first processing process, refer to a corresponding implementation when the downlink channel state information is represented by using the first dimension, the second dimension, and the third dimension.

For example, the downlink channel state information is traversed by using a cell P×Q×T×R as a unit, where 1≤P≤W, 1≤Q≤H, 1≤T≤D, and 1≤R≤A. In a traversal process, overlapping may be present or absent, and histogram statistics collection is performed for each cell P×Q×T×R. Details are not described herein again.

When the downlink channel state information includes the A groups of data of W×H×D, for an implementation of obtaining the feature of the downlink channel state information based on the first processing process, refer to a corresponding implementation when the downlink channel state information is represented by using the first dimension, the second dimension, and the third dimension.

For example, histogram statistics collection is performed on each group of the A groups of data to obtain features of the A groups of data, and the feature of the first data is obtained by splicing the features of the A groups of data. Specifically, one group of data of W×H×D is traversed by using a cell P×Q×T as a unit, where 1≤P≤W, 1≤Q≤H, and 1≤T≤D. In a traversal process, overlapping may be present or absent, and histogram statistics collection is performed for each cell P×Q×T, to obtain histogram data, where all obtained histogram data forms a feature of the group of data. Similarly, the features of the A groups of data are obtained, and the features of the A groups of data are spliced to obtain the feature of the first data.

In some embodiments, the first manner may further include the second processing process and/or the third processing process.

Optionally, the second processing process is a processing process before the first processing process, and the third processing process is a processing process after the first processing process.

It should be noted that for specific implementations of the first manner, the first processing process, the second processing process, and the third processing process, refer to the corresponding descriptions in S201. Details are not described herein again.

It should be noted that an execution sequence of S201 and S202 is not limited in this embodiment of this application.

In a possible design method, the method provided in this embodiment of this application may further include: S205: The network device sends a data feature request to the terminal device. Correspondingly, the terminal device receives the data feature request from the network device.

Optionally, the data feature request may be used to request the data feature information.

It should be noted that an execution occasion of S205 is not limited in this embodiment of this application. For example, S205 may be performed before or after S201.

In some embodiments, the data feature request may include at least one of first indication information and second indication information.

Optionally, the first indication information may indicate a process of obtaining the data feature information.

For example, the first indication information may indicate the first processing process; the first indication information may indicate the second processing process and the first processing process; the first indication information may indicate the first processing process and the third processing process; or the first indication information may indicate the second processing process, the first processing process, and the third processing process.

In this way, the network device may indicate the terminal device whether to use the second processing process and/or the third processing process to obtain the data feature information, and does not indicate a specific second processing process and/or a specific third processing process.

For another example, the first indication information may indicate the first processing process; the first indication information may indicate the Fourier transform and first processing process; the first indication information may indicate the first processing process and quantization; or the first indication information may indicate the Fourier transform, first processing process, and quantization.

In this way, the network device may indicate, to the terminal device, a specific second processing process and/or a specific third processing process of obtaining the data feature information.

Optionally, the second indication information may indicate a manner of obtaining the data feature information.

For example, the second indication information may indicate the histogram of oriented gradients HOG, local binary pattern LBP, edge orientation histogram EOH, edge histogram descriptor EHD, edge directional histogram EDH, deformable part model DPM, scale-invariant feature transformation SIFT, speeded up robust features SURF, or another manner that is of obtaining the data feature information and that is agreed upon in advance by the network device and the terminal device.

In this way, the network device may indicate a specific manner in which the terminal device obtains the data feature information.

Optionally, the first indication information and/or the second indication information may be pre-agreed upon.

Optionally, the process indicated by the first indication information may be the same as a process in which the network device obtains the feature of the training data, and the manner indicated by the second indication information may be the same as a manner in which the network device obtains the feature of the training data. In this way, accuracy of determining applicability between the artificial intelligence algorithm model and the first data can be improved.

In some embodiments, S202 may include: The terminal device may process the pre-obtained first data based on the first indication information and/or the second indication information, to obtain the data feature information.

For example, assuming that the first indication information indicates the second processing process and the first processing process, the terminal device may process the first data through one or more processes that are included in the second processing process and the first processing process, to obtain the data feature information.

For another example, assuming that the first indication information indicates the first processing process and quantization, the terminal device may process the first data through the first processing process and quantization, to obtain the data feature information.

For another example, assuming that the first indication information indicates the second processing process and the first processing process, and the second indication information indicates the HOG, the terminal device may process the first data through a process corresponding to the HOG in the second processing process and the first processing process, to obtain the data feature information. These are not enumerated one by one in this application.

It should be noted that if the data feature request does not include the first indication information or the second indication information, an execution sequence of S205 and S202 is not limited in this embodiment of this application. If the data feature request includes at least one of the first indication information and the second indication information, S202 may be performed after S205 in this embodiment of this application.

It should be noted that the data feature request used to request the data feature information, the first indication information, and the second indication information may be sent by the network device to the terminal device in one step, or may be sent by the network device to the terminal device in a plurality of steps. This is not limited in this application.

S203: The terminal device sends the data feature information to the network device. Correspondingly, the network device receives the data feature information from the terminal device.

It should be noted that for a specific implementation of the data feature information, refer to the corresponding descriptions in S202. Details are not described herein again.

In some embodiments, that the terminal device sends the data feature information to the network device in S203 may include: The terminal device sends the data feature information, and third indication information and/or fourth indication information to the network device.

Optionally, the third indication information indicates a process of obtaining the data feature information. For an implementation of the third indication information, refer to the first indication information. Details are not described herein again.

Optionally, the fourth indication information indicates a manner of obtaining the data feature information. For an implementation of the fourth indication information, refer to the second indication information. Details are not described herein again.

In this way, the terminal device may indicate, to the network device, a specific manner and/or process of obtaining the data feature information by the terminal device.

Optionally, that the network device obtains M pieces of model feature information in S201 may include: The network device obtains the M pieces of model feature information based on the third indication information and/or the fourth indication information.

Optionally, based on the third indication information and/or the fourth indication information, the network device may obtain the M pieces of model feature information that are consistent with those generated by using a method used by the terminal device for generating data feature information. In this way, accuracy of determining applicability between the artificial intelligence algorithm model and the first data can be improved. In this case, S201 may be performed after S203.

It should be noted that the data feature information, the third indication information, and the fourth indication information may be sent by the terminal device to the network device in one step, or may be sent by the terminal device to the network device in a plurality of steps. This is not limited in this application.

S204: The network device determines N artificial intelligence algorithm models in the M artificial intelligence algorithm models based on the data feature information and the M pieces of model feature information.

For example, the N artificial intelligence algorithm models are more suitable for processing the data than remaining (M-N) artificial intelligence algorithm models of the M artificial intelligence algorithm models.

For example, N is an integer greater than or equal to 0 and less than or equal to M.

In this way, the network device may determine, based on the feature of the first data and features of the M AI algorithm models, the N artificial intelligence algorithm models that are more applicable to the first data.

In some embodiments, N first distances corresponding to the N artificial intelligence algorithm models are N first distances with smallest values in M first distances.

Optionally, the N first distances correspond one-to-one to the N artificial intelligence algorithm models, and the M first distances correspond one-to-one to the M artificial intelligence algorithm models.

Optionally, the first distance is a distance between the feature of the artificial intelligence algorithm model and the feature of the first data.

For example, first distance 1 is a distance between a feature of artificial intelligence algorithm model 1 and the feature of the first data. First distance 2 is a distance between artificial intelligence algorithm model 2 and the feature of the first data.

In some embodiments, the first distance may include but is not limited to one or more of the following: a cosine similarity, a Euclidean distance, a Manhattan distance (Manhattan distance), a standard Euclidean distance (standardized Euclidean distance), a squared Euclidean distance (squared Euclidean distance), a Canberra distance (Canberra distance), a Chebyshev distance (Chebyshev distance), a correlation distance (correlation distance), a Mahalanobis distance (Mahalanobis distance), and a Minkowski distance (Minkowski distance).

For example, M=3 and N=2. The M artificial intelligence algorithm models include artificial intelligence algorithm model 1, artificial intelligence algorithm model 2, and artificial intelligence algorithm model 3, where artificial intelligence algorithm model 1 corresponds to first distance 1, artificial intelligence algorithm model 2 corresponds to first distance 2, and artificial intelligence algorithm model 3 corresponds to first distance 3. Assuming that first distance K first distance 2<first distance 2, the network device may select artificial intelligence algorithm model 1 corresponding to first distance 1 and artificial intelligence algorithm model 2 corresponding to first distance 2.

A shorter distance between the feature of the artificial intelligence algorithm model and the feature of the first data indicates that the artificial intelligence algorithm model is more applicable to the first data. In this way, the artificial intelligence algorithm model that is more applicable to the first data may be selected by calculating the distance between the feature of the first data and the feature of the artificial intelligence algorithm model.

In a possible design method, the method provided in this embodiment of this application may further include: S206: When a first condition is satisfied, the network device sends, to the terminal device, configuration information corresponding to at least one of the N artificial intelligence algorithm models. Correspondingly, the terminal device receives the configuration information corresponding to the at least one of the N artificial intelligence algorithm models from the network device.

Optionally, the first condition includes that N is greater than or equal to 1.

Optionally, the configuration information may be used to configure one or more of the following: the artificial intelligence algorithm model, a parameter of the artificial intelligence algorithm model, and a manner of obtaining the artificial intelligence algorithm model.

Optionally, the manner of obtaining the artificial intelligence algorithm model may indicate a method or a protocol for downloading the artificial intelligence algorithm model.

For example, the terminal device may download the artificial intelligence algorithm model in the manner indicated by the manner of obtaining the artificial intelligence algorithm model.

Optionally, after the terminal device receives the configuration information corresponding to the artificial intelligence algorithm model, the terminal device may select one artificial intelligence algorithm model (which may be the most applicable (the first distance is the smallest) or the more applicable artificial intelligence algorithm model) from at least one of the N artificial intelligence algorithm models to process the first data, to obtain processed data.

For example, if the first data is determined based on the CSI, the terminal device may encode the first data by using a most applicable AI encoder, to obtain encoded first data with high precision.

If the first data is positioning-related data, the terminal device may process the first data by using a most applicable AI algorithm model, to obtain more accurate location information of the terminal device, so that positioning of the terminal device is more accurate.

Optionally, the method provided in this embodiment of this application may further include: The terminal device sends model indication information and/or the processed first data to the network device. Correspondingly, the network device receives the model indication information and/or the processed first data from the terminal device.

Optionally, the model indication information may indicate a used artificial intelligence algorithm model. For example, if the terminal device processes the first data by using artificial intelligence algorithm model 1, the model indication information indicates artificial intelligence algorithm model 1. In this way, the terminal device may feed back the used artificial intelligence algorithm model to the network device.

For example, if the first data is determined based on the CSI, the terminal device may send encoded first data with high precision to the network device. If the first data is positioning-related data, the terminal device may not send the processed first data (location information of the terminal device) to the network device, and the terminal device only needs to obtain a location of the terminal device.

Optionally, if the first data is determined based on the CSI, after the network device receives the encoded first data with high precision, the network device processes the encoded first data by using an AI decoder, to obtain more accurate first data (decoded first data), to be specific, the decoded first data tends to be the same as (or the same as) the original first data (the first data before being encoded).

According to the algorithm model obtaining method shown in FIG. 2, the network device determines the N artificial intelligence algorithm models in the M artificial intelligence algorithm models based on the feature of the first data and the M pieces of model feature information, and sends, to the terminal device when the first condition is satisfied, the configuration information corresponding to the at least one of the N artificial intelligence algorithm models. The M pieces of model feature information correspond one-to-one to the M artificial intelligence algorithm models, and the model feature information includes the feature of the artificial intelligence algorithm model. In this way, accurate matching between the artificial intelligence algorithm model and the data can be implemented, the processed first data with high precision can be obtained, and a more applicable artificial intelligence algorithm model can be obtained for the data, to improve system performance.

Optionally, the first condition includes that N is greater than or equal to 1.

In addition, no additional information (for example, the AI decoder or original data) needs to be transmitted between the network device and the terminal device. The solution is simple. The accurate matching between the artificial intelligence algorithm model and the data can be implemented through lightweight data transmission and calculation.

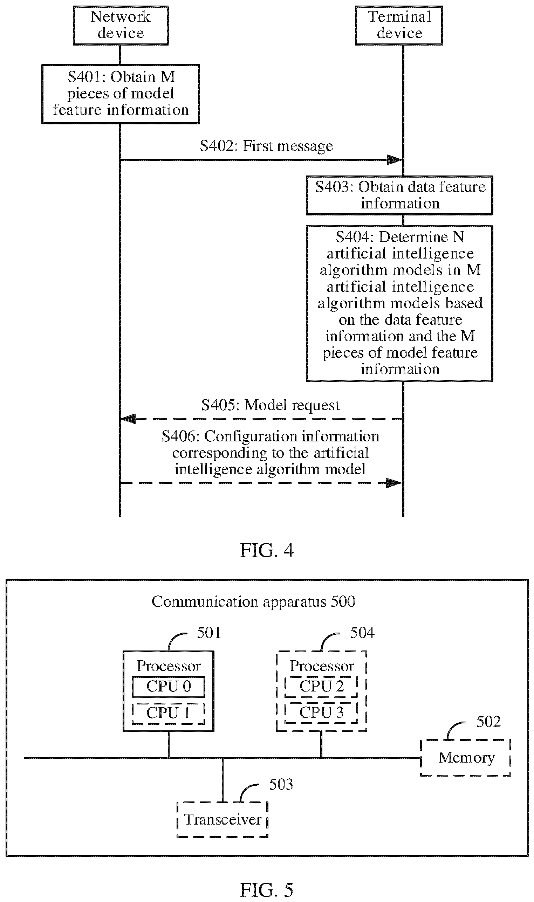

For example, FIG. 4 is a schematic flowchart of an algorithm model obtaining method according to an embodiment of this application. FIG. 4 is described by using an example in which a terminal device selects an applicable artificial intelligence algorithm model for first data.

As shown in FIG. 4, the algorithm model obtaining method includes the following steps.

S401: A network device obtains M pieces of model feature information.

For example, the M pieces of model feature information correspond one-to-one to M artificial intelligence algorithm models stored in the network device or stored in a device (for example, a server) corresponding to the network device, where M is an integer greater than or equal to 1.

For example, the M artificial intelligence algorithm models are models that are capable of processing the first data.

Optionally, the first data may be data to be processed by using the artificial intelligence algorithm model stored in the network device.

Optionally, the first data may be pre-obtained by a terminal device.

For example, the first data may be data that is in the terminal device and that is to be processed with application of the artificial intelligence algorithm model.

Optionally, the first data may be determined based on downlink channel state information. Alternatively, the first data may be positioning-related data.

For example, an i^{th} piece of model feature information in the M pieces of model feature information may include a feature of an i^{th} artificial intelligence algorithm model, where i is any positive integer less than or equal to M.

In some embodiments, the i^{th} piece of model feature information may be determined based on features of K pieces of training data. For a specific implementation, refer to the corresponding descriptions in S201.

Optionally, the K pieces of training data may be training data of the i^{th} artificial intelligence algorithm model, where K is an integer greater than or equal to 1.

Optionally, that the i^{th} piece of model feature information is determined based on features of K pieces of training data may include: The i^{th} piece of model feature information may be determined based on a sum of the features of the K pieces of training data, or the model feature information may be determined based on an average value of the features of the K pieces of training data.

In some embodiments, a feature of one of the K pieces of training data may be obtained in a first manner. For a specific implementation, refer to the corresponding descriptions in S201.

Optionally, the first manner may include a first processing process, and the first processing process may include histogram statistics collection.

In some embodiments, the first manner may further include a second processing process and/or a third processing process, where the second processing process is a processing process before the first processing process, and the third processing process is a processing process after the first processing process.

It should be noted that for a specific implementation of S401, and specific implementations of the model feature information, the training data, the feature of the training data, the first manner, the first processing process, the second processing process, and the third processing process, refer to the corresponding descriptions in S201. Details are not described herein again.

S402: The network device sends a first message to the terminal device. Correspondingly, the terminal device receives the first message from the network device.

For example, the first message may include the M pieces of model feature information.

In some embodiments, the first message may further include at least one of first indication information and second indication information.

It should be noted that for specific implementations of the first indication information and the second indication information, refer to the corresponding descriptions in S205. Details are not described herein again.

In some embodiments, the first message further includes configuration information respectively corresponding to the M artificial intelligence algorithm models.

Optionally, the configuration information may be used to configure one or more of the following: the artificial intelligence algorithm model, a parameter of the artificial intelligence algorithm model, and a manner of obtaining the artificial intelligence algorithm model.

It should be noted that for a specific implementation of the configuration information, refer to the corresponding descriptions in S206. Details are not described herein again.

For example, the first message may include the M pieces of model feature information, and may further include one or more of the following: the first indication information, the second indication information, and the configuration information respectively corresponding to the M artificial intelligence algorithm models.

It should be noted that the M pieces of model feature information, the first indication information, the second indication information, and the configuration information respectively corresponding to the M artificial intelligence algorithm models may be sent by the network device to the terminal device in one step, or may be sent by the network device to the terminal device in a plurality of steps. This is not limited in this application.

S403: The terminal device obtains data feature information.

It should be noted that an execution sequence of S403 and S402 is not limited in this embodiment of this application.

For example, when the first message does not indicate a process and/or a manner of obtaining the first data (the first message does not include the first indication information and/or the second indication information), S403 may be performed before or after S402. When the first message indicates the process and/or the manner of obtaining the first data, S403 may be performed after S402.

For example, the data feature information may include a feature of the first data.

Optionally, the first data may be determined based on downlink channel state information CSI.

In some embodiments, the downlink channel state information may be represented by using a first dimension, a second dimension, and a third dimension, where the first dimension corresponds to a quantity of carriers or a quantity of sub-bands, the second dimension corresponds to a quantity of antenna ports or a quantity of radio frequency chains of the network device, and the third dimension represents a real part and an imaginary part. For a specific implementation, refer to the corresponding descriptions in S202. Details are not described herein again.

In some embodiments, that the downlink channel state information is represented by using a first dimension, a second dimension, and a third dimension may include: The downlink channel state information is represented by using the first dimension, the second dimension, the third dimension, and a fourth dimension. For a specific implementation, refer to the corresponding descriptions in S202. Details are not described herein again.

Optionally, the fourth dimension corresponds to a quantity of antennas of the terminal device.

In a possible design method, S403 may include: The terminal device processes the pre-obtained first data in the first manner, to obtain the data feature information. For a specific implementation, refer to S202. Details are not described herein again.

Optionally, the data feature information may be obtained in the first manner.

It should be noted that for a specific implementation of the first manner, refer to the corresponding descriptions in S201. Details are not described herein again.

S404: The terminal device determines N artificial intelligence algorithm models in the M artificial intelligence algorithm models based on the data feature information and the M pieces of model feature information.

For example, the N artificial intelligence algorithm models are more suitable for processing the data than remaining (M-N) artificial intelligence algorithm models of the M artificial intelligence algorithm models.

For example, N is an integer greater than or equal to 0 and less than or equal to M.

In this way, the terminal device may determine, based on the feature of the first data and features of the M AI algorithm models, the N artificial intelligence algorithm models that are more applicable to the first data.

In some embodiments, N first distances are N first distances with smallest values in M first distances. For a specific implementation, refer to the corresponding descriptions in S204. Details are not described herein again.

Optionally, the N first distances correspond one-to-one to the N artificial intelligence algorithm models, and the M first distances correspond one-to-one to the M artificial intelligence algorithm models.

It should be noted that, for a specific implementation of S404 and a specific implementation of the first distance, refer to the foregoing descriptions of S204, and the network device is replaced with the terminal device. Details are not described herein again.

In a possible design method, the method provided in this embodiment of this application may further include: S405: The terminal device sends a model request to the network device. Correspondingly, the network device receives the model request from the terminal device.

Optionally, the model request may be used to request a model for processing the first data.

Optionally, the model request may include at least one of identifiers of the N artificial intelligence algorithm models and L first distances.

For example, the terminal device may send the identifiers of the N artificial intelligence algorithm models to the network device, to request configuration information of the artificial intelligence algorithm model. The network device may determine, based on the identifiers of the N artificial intelligence algorithm models, to send configuration information of a part or all of the N artificial intelligence algorithm models.

Optionally, the L first distances are distances between features of L artificial intelligence algorithm models and the features of the first data.

Optionally, the L artificial intelligence algorithm models may include the N artificial intelligence algorithm models, where L is an integer greater than or equal to N and less than or equal to M.

For example, in addition to the configuration information of the N artificial intelligence algorithm models, the terminal device may further request more artificial intelligence algorithm models. In this way, the network device may determine, based on the L first distances, to send configuration information of a part or all of the L artificial intelligence algorithm models.

It should be noted that, if the first message in S402 includes the configuration information respectively corresponding to the M artificial intelligence algorithm models, this embodiment of this application may not include S405.

It should be noted that the request used to request the model for processing the first data, the identifiers of the N artificial intelligence algorithm models, and the L first distances may be sent by the terminal device to the network device in one step, or may be sent by the terminal device to the network device in a plurality of steps. This is not limited in this application.

In a possible design method, the method provided in this embodiment of this application may further include: S406: When a first condition is satisfied, the network device sends, to the terminal device, configuration information corresponding to at least one of the N artificial intelligence algorithm models or configuration information corresponding to at least one of the L artificial intelligence algorithm models. Correspondingly, the terminal device receives, from the network device, the configuration information corresponding to the at least one of the N artificial intelligence algorithm models or the configuration information corresponding to the at least one of the L artificial intelligence algorithm models.

Optionally, the first condition includes that N is greater than or equal to 1.

For example, the network device may send, to the terminal device, configuration information corresponding to a part or all of the artificial intelligence algorithm models requested by the terminal device.

Optionally, after the terminal device receives the configuration information corresponding to the artificial intelligence algorithm model, the terminal device may select one artificial intelligence algorithm model (which may be the most applicable (the first distance is the smallest) or the more applicable artificial intelligence algorithm model) from at least one of the N artificial intelligence algorithm models to process the first data, to obtain processed data.

For example, if the first data is determined based on the CSI, the terminal device may encode the first data by using a most applicable AI encoder, to obtain encoded first data.

If the first data is positioning-related data, the terminal device may process the first data by using a most applicable AI algorithm model, to obtain location information of the terminal device.

Optionally, the method provided in this embodiment of this application may further include: The terminal device sends model indication information and/or the processed first data to the network device. Correspondingly, the network device receives the model indication information and/or the processed first data from the terminal device. For a specific implementation, refer to the corresponding descriptions in the method shown in FIG. 2. Details are not described herein again.

According to the algorithm model obtaining method shown in FIG. 4, the terminal device determines the N artificial intelligence algorithm models in the M artificial intelligence algorithm models based on the feature of the first data and the M pieces of model feature information. In comparison with the remaining (M-N) artificial intelligence algorithm models in the M artificial intelligence algorithm models, the N artificial intelligence algorithm models are more suitable for processing the data, the M pieces of model feature information correspond one-to-one to the M artificial intelligence algorithm models, and the model feature information includes the feature of the artificial intelligence algorithm model. In this way, accurate matching between the artificial intelligence algorithm model and the data can be implemented, a more applicable artificial intelligence algorithm model can be obtained for the data, and the processed first data with high precision can be obtained, to improve system performance.

In addition, no additional information (for example, an AI decoder or original data) needs to be transmitted between the network device and the terminal device. The solution is simple. The accurate matching between the artificial intelligence algorithm model and the data can be implemented through lightweight data transmission and calculation.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

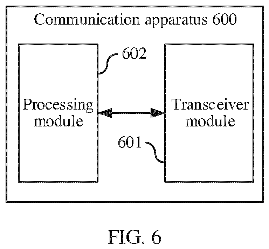

The algorithm model obtaining method provided in embodiments of this application is described above in detail with reference to FIG. 1 to FIG. 4. The following describes in detail communication apparatuses provided in embodiments of this application with reference to FIG. 5 and FIG. 6.

FIG. 5 is a diagram of a structure of a communication apparatus that can perform the algorithm model obtaining method according to an embodiment of this application. The communication apparatus 500 may be a network device or a terminal device; may be a chip in a network device or a terminal device; or may be another component having a corresponding function. As shown in FIG. 5, a communication apparatus 500 may include a processor 501. Optionally, the communication apparatus 500 may further include one or both of a memory 502 and a transceiver 503. The processor 501 and the one or both of the memory 502 and the transceiver 503 may be coupled, for example, may be connected through a communication bus; or the processor 501 may be used independently.

The following describes each component of the communication apparatus 500 in detail with reference to FIG. 5.

The processor 501 is a control center of the communication apparatus 500, and may be one processor or may be a collective term of a plurality of processing elements. For example, the processor 501 may be one or more central processing units (central processing units, CPUs) or an application-specific integrated circuit (application-specific integrated circuit, ASIC); or may be one or more integrated circuits, for example, one or more microprocessors (digital signal processors, DSPs) or one or more field programmable gate arrays (field programmable gate arrays, FPGAs), configured to implement embodiments of this application.

The processor 501 may perform various functions of the communication apparatus 500 by running or executing a software program stored in the memory 502 and invoking data stored in the memory 502.

During specific implementation, in an embodiment, the processor 501 may include one or more CPUs, for example, a CPU 0 and a CPU 1 shown in FIG. 5.

During specific implementation, in an embodiment, the communication apparatus 500 may alternatively include a plurality of processors, for example, the processor 501 and a processor 504 shown in FIG. 5. Each of the processors may be a single-core (single-CPU) processor or may be a multi-core (multi-CPU) processor. The processor herein may be one or more communication devices, circuits, and/or processing cores configured to process data (for example, computer program instructions).

Optionally, the memory 502 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of instructions or a data structure and that can be accessed by a computer. However, this is not limited thereto. The memory 502 may be integrated with the processor 501, or may exist independently, and is coupled to the processor 501 through an input/output port (not shown in FIG. 5) of the communication apparatus 500. This is not specifically limited in this embodiment of this application.

For example, the input port may be configured to implement a receiving function performed by the network device or the terminal device in any one of the foregoing method embodiments, and the output port may be configured to implement a sending function performed by the network device or the terminal device in any one of the foregoing method embodiments.

The memory 502 may be configured to store a software program for performing the solutions of this application, and the processor 501 controls execution of the software program. For a specific implementation, refer to the foregoing method embodiments. Details are not described herein again.

Optionally, the transceiver 503 is configured to communicate with another communication apparatus. In addition, the transceiver 503 may include a receiver and a transmitter (not separately shown in FIG. 5). The receiver is configured to implement a receiving function, and the transmitter is configured to implement a sending function. The transceiver 503 may be integrated with the processor 501, or may exist independently, and is coupled to the processor 501 through the input/output port (not shown in FIG. 5) of the communication apparatus 500. This is not specifically limited in this embodiment of this application.

It should be noted that the structure of the communication apparatus 500 shown in FIG. 5 does not constitute a limitation on the communication apparatus. An actual communication apparatus may include more or fewer components than those shown in the figure, or some components may be combined, or a different component arrangement may be used.

The actions of the network device in FIG. 2 to FIG. 4 may be performed by the processor 501 in the communication apparatus 500 shown in FIG. 5 by invoking the application program code stored in the memory 502, to indicate the network device to perform the actions.

The actions of the terminal device in FIG. 2 to FIG. 4 may be performed by the processor 501 in the communication apparatus 500 shown in FIG. 5 by invoking the application program code stored in the memory 502, to indicate the terminal device to perform the actions.

When the communication apparatus is a network device, the communication apparatus 500 may perform any one or more possible implementations related to the network device in the foregoing method embodiments. When the communication apparatus is a terminal device, the communication apparatus 500 may perform any one or more possible implementations related to the terminal device in the foregoing method embodiments.

It should be noted that all related content of the steps in the foregoing method embodiments may be cited in function descriptions of corresponding functional modules. Details are not described herein again.

FIG. 6 is a diagram of another structure of a communication apparatus according to an embodiment of this application. For ease of description, FIG. 6 shows only main components of the communication apparatus.

The communication apparatus 600 includes a transceiver module 601 and a processing module 602. The communication apparatus 600 may be the network device or the terminal device in the foregoing method embodiments. The transceiver module 601 may also be referred to as a transceiver unit, and is configured to implement receiving and sending functions performed by the network device or the terminal device in any one of the foregoing method embodiments.

It should be noted that the transceiver module 601 may include a receiving module and a sending module (not shown in FIG. 6). A specific implementation of the transceiver module 601 is not specifically limited in this application. The transceiver module 601 may include a transceiver circuit, a transceiver machine, a transceiver, or a communication interface.

The processing module 602 may be configured to implement a processing function performed by the network device or the terminal device in any one of the foregoing method embodiments. The processing module 602 may be a processor.

In this embodiment, the communication apparatus 600 is presented in a form of functional modules obtained through division in an integrated manner. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the communication apparatus 600 may be in a form of the communication apparatus 500 shown in FIG. 5.

For example, the processor 501 in the communication apparatus 500 shown in FIG. 5 may invoke computer-executable instructions stored in the memory 502, so that the method in the foregoing method embodiments is performed.

Specifically, a function/an implementation process of the transceiver module 601 and the processing module 602 in FIG. 6 may be implemented by the processor 501 in the communication apparatus 500 shown in FIG. 5 by invoking the computer-executable instructions stored in the memory 502. Alternatively, a function/an implementation process of the processing module 602 in FIG. 6 may be implemented by the processor 501 in the communication apparatus 500 shown in FIG. 5 by invoking the computer-executable instructions stored in the memory 502, and a function/an implementation process of the transceiver module 601 in FIG. 6 may be implemented by the transceiver 503 in the communication apparatus 500 shown in FIG. 5.

In a possible design solution, the communication apparatus 600 shown in FIG. 6 is applicable to the communication system shown in FIG. 1, and performs a function of the network device in the algorithm model obtaining method shown in FIG. 2.

The processing module 602 is configured to obtain M pieces of model feature information; the transceiver module 601 is configured to receive data feature information from a terminal device; the processing module 602 is further configured to determine N artificial intelligence algorithm models in M artificial intelligence algorithm models based on the data feature information and the M pieces of model feature information; and the transceiver module 601 is further configured to: when a first condition is satisfied, send configuration information corresponding to at least one of the N artificial intelligence algorithm models to the terminal device, where the M pieces of model feature information correspond one-to-one to the M artificial intelligence algorithm models stored in the communication apparatus 600 or stored in a server corresponding to the communication apparatus, an i^{th} piece of model feature information in the M pieces of model feature information includes a feature of an i^{th} artificial intelligence algorithm model, and the M artificial intelligence algorithm models are models that are capable of processing first data; the first data is data to be processed by using the artificial intelligence algorithm model stored in the communication apparatus 600; the N artificial intelligence algorithm models are more suitable for processing the data than remaining (M-N) artificial intelligence algorithm models of the M artificial intelligence algorithm models; the data feature information includes a feature of the first data; and the configuration information is used to configure one or more of the following: the artificial intelligence algorithm model, a parameter of the artificial intelligence algorithm model, and a manner of obtaining the artificial intelligence algorithm model, where M is a positive integer greater than or equal to 1, N is an integer greater than or equal to 0 and less than or equal to M, and i is any positive integer less than or equal to M.

Optionally, the first condition includes that N is greater than or equal to 1.

It should be noted that all related content of the steps in the foregoing method embodiments may be cited in function descriptions of corresponding functional modules. Details are not described herein again.

Optionally, the communication apparatus 600 may further include a storage module (not shown in FIG. 6), and the storage module stores a program or instructions. When the processing module 602 executes the program or the instructions, the communication apparatus 600 is enabled to perform a function of the network device in the method shown in FIG. 2.

It should be noted that the communication apparatus 600 may be a network device, or may be a chip (system) or another component or assembly that can be disposed in the network device. This is not limited in this application.

For technical effects of the communication apparatus 600, refer to the technical effects of the algorithm model obtaining method shown in FIG. 2. Details are not described herein again.

In a possible design solution, the communication apparatus 600 shown in FIG. 6 is applicable to the communication system shown in FIG. 1, and performs a function of the terminal device in the algorithm model obtaining method shown in FIG. 2.

The processing module 602 is configured to process pre-obtained first data in a first manner, to obtain data feature information; the transceiver module 601 is configured to send data feature information to a network device; and the transceiver module 601 is further configured to receive configuration information corresponding to at least one of N artificial intelligence algorithm models from the network device, where the first data is data to be processed by using the artificial intelligence algorithm model stored in the network device; the first manner includes a first processing process, and the first processing process includes histogram statistics collection; and the configuration information is used to configure one or more of the following: the artificial intelligence algorithm model, a parameter of the artificial intelligence algorithm model, and a manner of obtaining the artificial intelligence algorithm model, where
the first data may be determined based on downlink channel state information CSI.

It should be noted that all related content of the steps in the foregoing method embodiments may be cited in function descriptions of corresponding functional modules. Details are not described herein again.

Optionally, the communication apparatus 600 may further include a storage module (not shown in FIG. 6), and the storage module stores a program or instructions. When the processing module 602 executes the program or the instructions, the communication apparatus 600 is enabled to perform a function of the terminal device in the method shown in FIG. 2.

It should be noted that the communication apparatus 600 may be a terminal device, or may be a chip (system) or another component or assembly that can be disposed in the terminal device. This is not limited in this application.

For technical effects of the communication apparatus 600, refer to the technical effects of the algorithm model obtaining method shown in FIG. 2. Details are not described herein again.

In still another possible design solution, the communication apparatus 600 shown in FIG. 6 is applicable to the communication system shown in FIG. 1, and performs a function of the terminal device in the algorithm model obtaining method shown in FIG. 4.

The transceiver module 601 is configured to receive a first message from a network device; the processing module 602 is configured to obtain data feature information; and the processing module 602 is further configured to determine N artificial intelligence algorithm models in M artificial intelligence algorithm models based on the data feature information and M pieces of model feature information, where the first message includes the M pieces of model feature information, the M pieces of model feature information correspond one-to-one to the M artificial intelligence algorithm models stored in the network device or stored in a device (for example, a server) corresponding to the network device, an i^{th} piece of model feature information in the M pieces of model feature information includes a feature of an i^{th} artificial intelligence algorithm model, and the M artificial intelligence algorithm models are models that are capable of processing first data; the first data is data to be processed by using the artificial intelligence algorithm model stored in the network device; the data feature information includes a feature of the first data; and the N artificial intelligence algorithm models are more suitable for processing the data than remaining (M-N) artificial intelligence algorithm models of the M artificial intelligence algorithm models, where M is a positive integer greater than or equal to 1, N is an integer greater than or equal to 0 and less than or equal to M, and i is any positive integer less than or equal to M.

It should be noted that all related content of the steps in the foregoing method embodiments may be cited in function descriptions of corresponding functional modules. Details are not described herein again.

Optionally, the communication apparatus 600 may further include a storage module (not shown in FIG. 6), and the storage module stores a program or instructions. When the processing module 602 executes the program or the instructions, the communication apparatus 600 is enabled to perform a function of the terminal device in the method shown in FIG. 4.

It should be noted that the communication apparatus 600 may be a terminal device, or may be a chip (system) or another component or assembly that can be disposed in the terminal device. This is not limited in this application.

For technical effects of the communication apparatus 600, refer to the technical effects of the algorithm model obtaining method shown in FIG. 4. Details are not described herein again.

In still another possible design solution, the communication apparatus 600 shown in FIG. 6 is applicable to the communication system shown in FIG. 1, and performs a function of the network device in the algorithm model obtaining method shown in FIG. 4.

The processing module 602 is configured to obtain M pieces of model feature information; and the transceiver module 601 is configured to send a first message to a terminal device, where the M pieces of model feature information correspond one-to-one to M artificial intelligence algorithm models stored in the communication apparatus 600 or stored in a server corresponding to the communication apparatus, an i^{th} piece of model feature information in the M pieces of model feature information includes a feature of an i^{th} artificial intelligence algorithm model, the i^{th} piece of model feature information is determined based on features of K pieces of training data, the K pieces of training data are training data of the i^{th} artificial intelligence algorithm model, M is a positive integer greater than or equal to 1, i is any positive integer less than or equal to M, and K is a positive integer greater than or equal to 1; the first message includes the M pieces of model feature information; and the M artificial intelligence algorithm models are models that are capable of processing first data pre-obtained by the terminal device, and the first data is data to be processed by using the artificial intelligence algorithm model stored in the communication apparatus 600.

It should be noted that all related content of the steps in the foregoing method embodiments may be cited in function descriptions of corresponding functional modules. Details are not described herein again.

Optionally, the communication apparatus 600 may further include a storage module (not shown in FIG. 6), and the storage module stores a program or instructions. When the processing module 602 executes the program or the instructions, the communication apparatus 600 is enabled to perform a function of the network device in the method shown in FIG. 4.

It should be noted that the communication apparatus 600 may be a network device, or may be a chip (system) or another component or assembly that can be disposed in the network device. This is not limited in this application.

For technical effects of the communication apparatus 600, refer to the technical effects of the algorithm model obtaining method shown in FIG. 4. Details are not described herein again.

An embodiment of this application provides a communication system. The communication system includes a terminal device and a network device.

The terminal device is configured to perform an action of the terminal device in the foregoing method embodiment. For a specific execution method and process, refer to the foregoing method embodiment. Details are not described herein again.

The network device is configured to perform an action of the network device in the foregoing method embodiment. For a specific execution method and process, refer to the foregoing method embodiment. Details are not described herein again.

An embodiment of this application provides a chip system. The chip system includes a logic circuit and an input/output port. The logic circuit may be configured to implement a processing function in the method provided in embodiments of this application, and the input/output port may be configured to implement receiving and sending functions in the method provided in embodiments of this application.

For example, the input port may be configured to implement the receiving function related to the method provided in embodiments of this application, and the output port may be configured to implement the sending function related to the method provided in embodiments of this application.

For example, the processor in the communication apparatus 500 may be configured to perform, for example, but not limited to, baseband-related processing, and the transceiver in the communication apparatus 500 may be configured to perform, for example, but not limited to, radio frequency receiving and sending. The foregoing components may be separately disposed on chips that are independent of each other, or at least some or all of the components may be disposed on a same chip. For example, the processor may further be divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-chip (system-on-chip). Whether components are independently disposed on different chips or are integrated on one or more chips usually depends on specific requirements of a product design. Specific implementation forms of the components are not limited in embodiments of the present invention.

In a possible design, the chip system further includes a memory, and the memory is configured to store program instructions and data for implementing functions in the method provided in embodiments of this application.

The chip system may include a chip; or may include a chip and another discrete component.

An embodiment of this application provides a computer-readable storage medium. The computer-readable storage medium stores a computer program or instructions. When the computer program runs or the instructions are run on a computer, the method provided in embodiments of this application is performed.

An embodiment of this application provides a computer program product. The computer program product includes a computer program or instructions. When the computer program runs or the instructions are run on a computer, the method provided in embodiments of this application is performed.

It should be understood that the processor in embodiments of this application may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example, and not limitative descriptions, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A part or all of the foregoing embodiments may be implemented using software, hardware (for example, circuit), firmware, or any combination thereof. When software is used for implementing the embodiments, a part or all of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, "A and/or B" may represent the following three cases: Only A exists, both A and B exist, and only B exists, where A and B may be singular or plural. In addition, the character "/" in this specification usually represents an "or" relationship between the associated objects, or may represent an "and/or" relationship. A specific meaning depends on foregoing and following descriptions.

In this application, at least one means one or more, and a plurality of means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

If no conflict is caused, any content in any two or more embodiments of this application may be freely combined, and a combined technical solution also falls within the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform a part or all of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication system, wherein the communication system comprises a network device and a terminal device, wherein
the network device is configured to obtain M pieces of model feature information, wherein the M pieces of model feature information correspond one-to-one to M artificial intelligence algorithm models stored in the network device or stored in a device corresponding to the network device, an i^{th} piece of model feature information in the M pieces of model feature information comprises a feature of an i^{th} artificial intelligence algorithm model, the M artificial intelligence algorithm models are models that are capable of processing first data pre-obtained by the terminal device, and the first data is data to be processed by using the artificial intelligence algorithm model stored in the network device;
the terminal device is configured to process the pre-obtained first data in a first manner to obtain data feature information, wherein the first manner comprises a first processing process, and the first processing process comprises histogram statistics collection;
the terminal device is further configured to send the data feature information to the network device;
the network device is further configured to receive the data feature information from the terminal device;
the network device is further configured to determine N artificial intelligence algorithm models in the M artificial intelligence algorithm models based on the data feature information and the M pieces of model feature information, wherein the N artificial intelligence algorithm models are more suitable for processing the data than remaining (M-N) artificial intelligence algorithm models of the M artificial intelligence algorithm models, M is a positive integer greater than or equal to 1, N is an integer greater than or equal to 0 and less than or equal to M, and i is any positive integer less than or equal to M;
the network device is further configured to: when a first condition is satisfied, send configuration information corresponding to at least one of the N artificial intelligence algorithm models to the terminal device, wherein the configuration information is used to configure one or more of the following: the artificial intelligence algorithm model, a parameter of the artificial intelligence algorithm model, and a manner of obtaining the artificial intelligence algorithm model; and
the terminal device is further configured to receive the configuration information corresponding to the at least one of the N artificial intelligence algorithm models from the network device.

2. The communication system according to claim 1, wherein the i^{th} piece of model feature information is determined based on features of K pieces of training data, the K pieces of training data are training data of the i^{th} artificial intelligence algorithm model, and K is an integer greater than or equal to 1.

3. The communication system according to claim 2, wherein a feature of one of the K pieces of training data is obtained in a first manner, the first manner comprises a first processing process, and the first processing process comprises histogram statistics collection.

4. The communication system according to any one of claims 1 to 3, wherein
the network device is further configured to send a data feature request to the terminal device, wherein the data feature request is used to request the data feature information; and
the terminal device is further configured to receive the data feature request from the network device.

5. The communication system according to claim 4, wherein the data feature request comprises at least one of first indication information and second indication information, wherein
the first indication information indicates a process of obtaining the data feature information; and
the second indication information indicates a manner of obtaining the data feature information.

6. The communication system according to any one of claims 1 to 5, wherein the first data is determined based on downlink channel state information CSI.

7. The communication system according to any one of claims 1 to 6, wherein the first condition comprises that N is greater than or equal to 1.

8. A communication system, wherein the communication system comprises a network device and a terminal device, wherein
the network device is configured to obtain M pieces of model feature information, wherein the M pieces of model feature information correspond one-to-one to M artificial intelligence algorithm models stored in the network device or stored in a device corresponding to the network device, the M artificial intelligence algorithm models are models that are capable of processing first data pre-obtained by the terminal device, the first data is data to be processed by using the artificial intelligence algorithm model stored in the network device, an i^{th} piece of model feature information in the M pieces of model feature information comprises a feature of an i^{th} artificial intelligence algorithm model, the i^{th} piece of model feature information is determined based on features of K pieces of training data, the K pieces of training data are training data of the i^{th} artificial intelligence algorithm model, M is a positive integer greater than or equal to 1, i is any positive integer less than or equal to M, and K is a positive integer greater than or equal to 1;
the network device is further configured to send a first message to the terminal device, wherein the first message comprises the M pieces of model feature information;
the terminal device is configured to receive the first message from the network device;
the terminal device is further configured to obtain data feature information, wherein the data feature information comprises a feature of the first data; and
the terminal device is further configured to determine N artificial intelligence algorithm models in the M artificial intelligence algorithm models based on the data feature information and the M pieces of model feature information, wherein the N artificial intelligence algorithm models are more suitable for processing the data than remaining (M-N) artificial intelligence algorithm models of the M artificial intelligence algorithm models, M is a positive integer greater than or equal to 1, N is an integer greater than or equal to 0 and less than or equal to M, and i is any positive integer less than or equal to M.

9. The communication system according to claim 8, wherein the data feature information is obtained in a first manner, the first manner comprises a first processing process, and the first processing process comprises histogram statistics collection.

10. The communication system according to claim 8 or 9, wherein the first message further comprises configuration information respectively corresponding to the M artificial intelligence algorithm models, and the configuration information is used to configure one or more of the following: the artificial intelligence algorithm model, a parameter of the artificial intelligence algorithm model, and a manner of obtaining the artificial intelligence algorithm model.

11. The communication system according to any one of claims 8 to 10, wherein
the terminal device is further configured to send a model request to the network device, wherein the model request is used to request a model for processing the first data, the model request comprises at least one of identifiers of the N artificial intelligence algorithm models and L first distances, the L first distances are distances between features of L artificial intelligence algorithm models and the feature of the first data, the L artificial intelligence algorithm models comprise the N artificial intelligence algorithm models, and L is an integer greater than or equal to N and less than or equal to M; and
the network device is further configured to receive the model request from the terminal device.

12. The communication system according to any one of claims 8 to 11, wherein the terminal device is further configured to: when a first condition is satisfied, process the data by using at least one of the N artificial intelligence algorithm models, wherein the first condition comprises that N is greater than or equal to 1.

13. An artificial intelligence algorithm model obtaining method, comprising:
obtaining, by a network device, M pieces of model feature information, wherein the M pieces of model feature information correspond one-to-one to M artificial intelligence algorithm models stored in the network device or stored in a device corresponding to the network device, an i^{th} piece of model feature information in the M pieces of model feature information comprises a feature of an i^{th} artificial intelligence algorithm model, the M artificial intelligence algorithm models are models that are capable of processing first data pre-obtained by a terminal device, and the first data is data to be processed by using the artificial intelligence algorithm model stored in the network device;
receiving, by the network device, data feature information from the terminal device, wherein the data feature information comprises a feature of the first data;
determining, by the network device, N artificial intelligence algorithm models in the M artificial intelligence algorithm models based on the data feature information and the M pieces of model feature information, wherein M is a positive integer greater than or equal to 1, N is an integer greater than or equal to 0 and less than or equal to M, i is any positive integer less than or equal to M, and the N artificial intelligence algorithm models are more suitable for processing the data than remaining (M-N) artificial intelligence algorithm models of the M artificial intelligence algorithm models; and
when a first condition is satisfied, sending, by the network device, configuration information corresponding to at least one of the N artificial intelligence algorithm models to the terminal device, wherein the configuration information is used to configure one or more of the following: the artificial intelligence algorithm model, a parameter of the artificial intelligence algorithm model, and a manner of obtaining the artificial intelligence algorithm model.

14. The method according to claim 13, wherein the i^{th} piece of model feature information is determined based on features of K pieces of training data, the K pieces of training data are training data of the i^{th} artificial intelligence algorithm model, and K is an integer greater than or equal to 1.

15. The method according to claim 13 or 14, wherein the first condition comprises that N greater than or equal to 1.

16. An artificial intelligence algorithm model obtaining method, comprising:
processing, by a terminal device, pre-obtained first data in a first manner, to obtain data feature information, wherein the first manner comprises a first processing process, the first processing process comprises histogram statistics collection, and the first data is data to be processed by using an artificial intelligence algorithm model stored in a network device;
sending, by the terminal device, the data feature information to the network device; and
receiving, by the terminal device, configuration information corresponding to at least one of N artificial intelligence algorithm models from the network device, wherein the configuration information is used to configure one or more of the following: the artificial intelligence algorithm model, a parameter of the artificial intelligence algorithm model, and a manner of obtaining the artificial intelligence algorithm model.

17. An artificial intelligence algorithm model obtaining method, comprising:
receiving, by a terminal device, a first message from a network device, wherein the first message comprises M pieces of model feature information, the M pieces of model feature information correspond one-to-one to M artificial intelligence algorithm models stored in the network device or stored in a device corresponding to the network device, an i^{th} piece of model feature information in the M pieces of model feature information comprises a feature of an i^{th} artificial intelligence algorithm model, the M artificial intelligence algorithm models are models that are capable of processing first data pre-obtained by the terminal device, and the first data is data to be processed by using the artificial intelligence algorithm model stored in the network device;
obtaining, by the terminal device, data feature information, wherein the data feature information comprises a feature of the first data; and
determining, by the terminal device, N artificial intelligence algorithm models in the M artificial intelligence algorithm models based on the data feature information and the M pieces of model feature information, wherein the N artificial intelligence algorithm models are more suitable for processing the data than remaining (M-N) artificial intelligence algorithm models of the M artificial intelligence algorithm models, M is a positive integer greater than or equal to 1, N is an integer greater than or equal to 0 and less than or equal to M, and i is any positive integer less than or equal to M.

18. The method according to claim 17, wherein the first message further comprises configuration information respectively corresponding to the M artificial intelligence algorithm models, and the configuration information is used to configure one or more of the following: the artificial intelligence algorithm model, a parameter of the artificial intelligence algorithm model, and a manner of obtaining the artificial intelligence algorithm model.

19. An artificial intelligence algorithm model obtaining method, comprising:
obtaining, by a network device, M pieces of model feature information, wherein the M pieces of model feature information correspond one-to-one to M artificial intelligence algorithm models stored in the network device or stored in a device corresponding to the network device, an i^{th} piece of model feature information in the M pieces of model feature information comprises a feature of an i^{th} artificial intelligence algorithm model, the i^{th} piece of model feature information is determined based on features of K pieces of training data, the K pieces of training data are training data of the i^{th} artificial intelligence algorithm model, the M artificial intelligence algorithm models are models that are capable of processing first data pre-obtained by a terminal device, the first data is data to be processed by using the artificial intelligence algorithm model stored in the network device, M is a positive integer greater than or equal to 1, i is any positive integer less than or equal to M, and K is a positive integer greater than or equal to 1; and
sending, by the network device, a first message to the terminal device, wherein the first message comprises the M pieces of model feature information.

20. A communication apparatus, wherein the communication apparatus comprises a processor, and the processor is configured to perform the method according to any one of claims 13 to 19.

21. A computer-readable storage medium, wherein the computer-readable storage medium stores a computer program or instructions; and when the computer program runs or the instructions are run on a computer, the method according to any one of claims 13 to 19 is implemented.

22. A computer program product, wherein the computer program product comprises a computer program or instructions; and when the computer program runs or the instructions are run on a computer, the method according to any one of claims 13 to 19 is performed.
